(19) Europäisches Patentamt
European Patent Office
Office européen des brevets

(11) **EP 4 416 216 B1**

(12) **EUROPEAN PATENT SPECIFICATION**

(45) Date of publication and mention of the grant of the patent:
**17.09.2025 Bulletin 2025/38**

(21) Application number: **22801738.0**

(22) Date of filing: **06.10.2022**

(51) International Patent Classification (IPC):
***C08K 5/00*** *(2006.01)* ***C08K 5/09*** *(2006.01)*
***C08K 5/3432*** *(2006.01)* ***C08K 5/42*** *(2006.01)*
***C08K 5/3462*** *(2006.01)*

(52) Cooperative Patent Classification (CPC):
(C-Sets available)
**C08K 5/3432; C08K 5/0025; C08K 5/09;**
**C08K 5/3462; C08K 5/42** (Cont.)

(86) International application number:
**PCT/EP2022/077792**

(87) International publication number:
**WO 2023/061841 (20.04.2023 Gazette 2023/16)**

(54) **FLUOROELASTOMER COMPOSITION**

FLUORELASTOMERZUSAMMENSETZUNG

COMPOSITION DE FLUOROÉLASTOMÈRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.10.2021 EP 21202584**

(43) Date of publication of application:
**21.08.2024 Bulletin 2024/34**

(73) Proprietor: **Syensqo Specialty Polymers Italy S.p.A.**
**20021 Bollate (MI) (IT)**

(72) Inventors:
- **BOSSOLO, Stefano**
  **20015 Parabiago (MI) (IT)**
- **MONTALBETTI, Andrea**
  **21049 Tradate (VA) (IT)**

(74) Representative: **Briatore, Andrea**
**Syensqo S.A.**
**Viale Lombardia, 20**
**20021 Bollate (MI) (IT)**

(56) References cited:
**WO-A1-2020/188125** **US-A- 5 756 588**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/0025, C08L 27/16;**
**C08K 5/09, C08L 27/16;**
**C08K 5/3432, C08L 27/16;**
**C08K 5/3462, C08L 27/16;**
**C08K 5/42, C08L 27/16**

## Description

This application claims priority from European patent application Nr 21202584.5 filed on October 14, 2021.

## Technical Field

The invention relates to a fluoroelastomer curable composition, to a method for curing the same, and to cured articles derived there from.

## Background Art

Vulcanized fluoroelastomers have been used in a variety of applications, in particular for manufacturing sealing articles such as oil seals, gaskets, shaft seals and O-rings, because of several desirable properties such as heat resistance, chemical resistance, weatherability, etc.

It is nevertheless required for "as polymerized" fluoroelastomers to undergo curing/crosslinking processes (so-called "vulcanization") in order to ensure required sealing and mechanical properties to be exhibited in final parts.

Several techniques have been developed for ensuring creation of a three-dimensional cured structure able to deliver expected performances. The underlying chemistry generally requires a crosslinking agent to provide for connections between fluoroelastomer polymer chains. Nature and reactivity of the crosslinking agents used enable categorizing cross-linking systems. The most widely used systems are based either on polyhydroxyaromatic compounds (typically bisphenols), reacting through "ionic" chemistry in the presence of basic compounds and onium accelerators, via displacement of acidic hydrogen atoms in the chain, or on poly-unsatured compounds, reacting via radical chemistry in the presence of peroxide(s), via displacement of labile groups (typically iodine or bromine atoms) in the chain.

While it is acknowledged that overall performances of the fluoroelastomers will depend upon the nature, molecular structure and composition of the fluoroelastomer itself, it is nevertheless true that chemistry of cross-linking may have a significant impact on the same. Hence, there is a continuous quest in the art for alternative and improved crosslinking system, based on alternative chemistry, delivering outstanding cross linking ability and hence sealing performances in cured parts, being hence safer and cheaper than the above, and which could obviate to the drawbacks of the ionic or peroxide cross-linking systems of the prior art.

Among the others, WO 2016/180660 (published on 17 November 2016 in the name of Solvay Specialty Polymers Italy S.p.A.) discloses a fluoroelastomer composition comprising at least one fluoroelastomer (A), at least one base (B), at least one pyridinium-type salt (P) having at least two groups in ortho or para position to the quaternized nitrogen atom bearing a reactive hydrogen. This patent application discloses several pyridinium-type salts comprising an aromatic ring-quaternized nitrogen atom that is salified in particular with p-toluensulphonate.

More recently, the above mentioned pyridiunium salts (P) have been disclosed in WO 2020/188125 (published on 24 September 2020 in the name of Solvay Specialty Polymers Italy S.p.A.) as ingredient in a fluoroelastomer composition for bis-phenol curing, and as being useful to provide excellent molding and demolding performances, with high yield and substantially no mold fouling, significantly reducing blisters and flashes.

## Summary of invention

The Applicant noted that the curing performance of (per)fluoroelastomer compositions comprising the at least one pyridinium-type salt (P) having at least two groups in ortho or para position to the quaternized nitrogen atom bearing a reactive hydrogen disclosed in the above patent applications are not optimal for the manufacture of cured articles via injection molding.

Without being bound by any theory, the Applicant noted that the elastomer compositions disclosed notably in WO 2016/180660 cited above showed a too fast torque increase at the beginning of the injection molding process, which was undesired for an optimal curing process.

Hence, facing the technical problem of improving the citing process when using (per)fluoroelastomer compositions comprising the at least one pyridinium-type salt, the Applicant surprisingly found that a composition comprising an organic aromatic acid in a selected amount allowed to control, more precisely to slow down, the torque increase at the beginning of the injection molding process, thus improving the curing process and providing a cured elastomer composition with good mechanical properties.

Thus, in a first embodiment, the present invention relates to a fluoroelastomer composition [composition (C)] comprising:

- at least one vinylidene-fluoride based fluoroelastomer comprising recurring units derived from vinylidene fluoride (VDF) and from at least one additional (per)fluorinated monomer different from VDF [fluoroelastomer (A)];

- 0.30 to 2.5 phr based on 100 phr of fluoroelastomer (A) of at least one organic aromatic acid, [acid (OA)], which is a compound comprising at least one aromatic ring and at least one acid group, which is linked to said aromatic ring via a sigma bond or a linking group, with the proviso that when the acid group is -COOH the aromatic ring does not comprise an -OH group in the para- or meta-position with respect to said acid group; and
- at least one pyridinium salt [salt (P)] complying with any of formulae (P1) to (P-12):

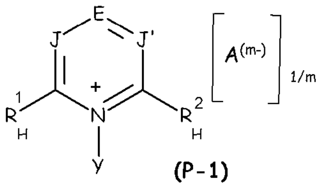
(P-1)

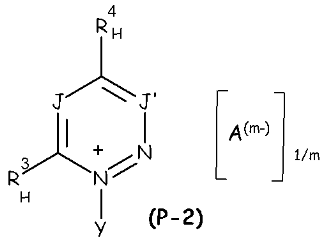
(P-2)

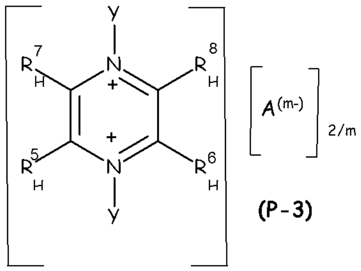
(P-3)

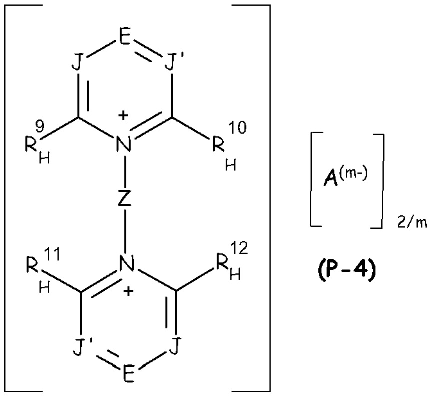
(P-4)

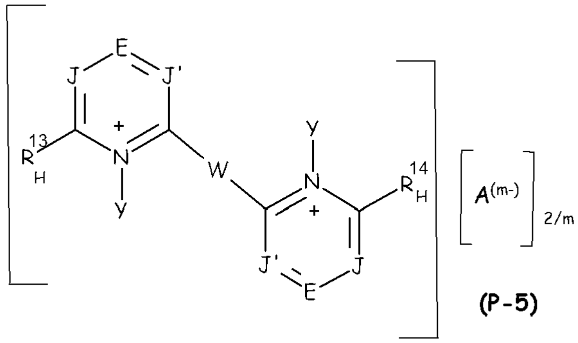
(P-5)

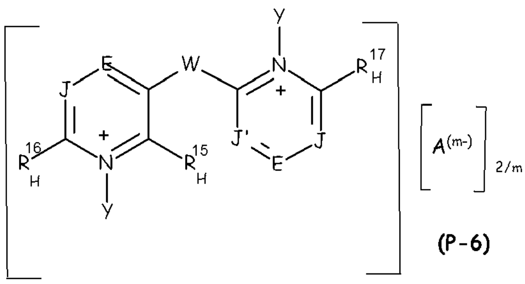
(P-6)

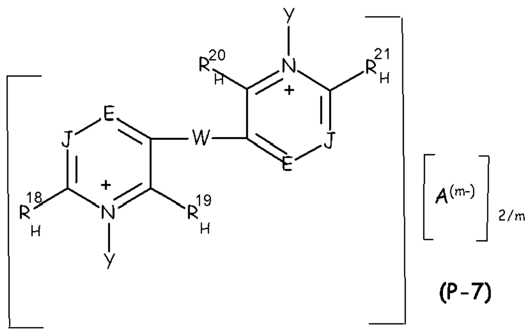
(P-7)

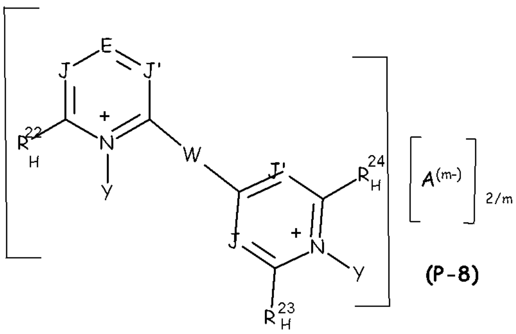
(P-8)

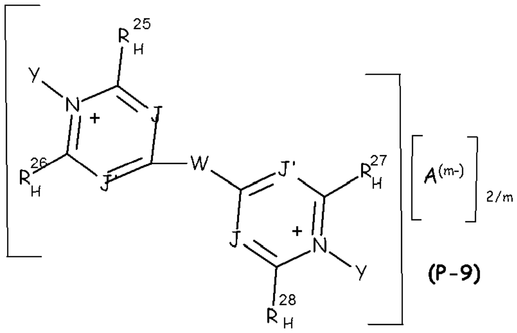
(P-9)

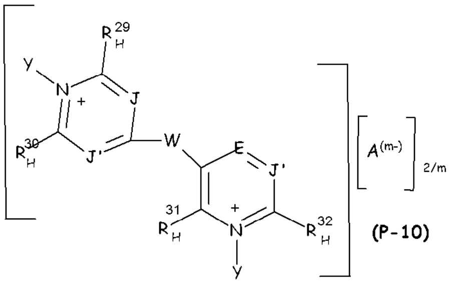
(P-10)

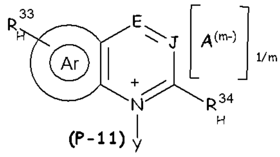
(P-11)

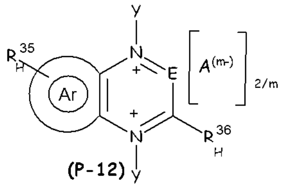
(P-12)

wherein:

- each of J and J', equal to or different from each other, is independently at each occurrence C-R* or N, wherein R* is H or a $C_1$-$C_{12}$ hydrocarbon group;
- E is N or a group of formula C-$R°_H$;
- Z is a divalent hydrocarbon group comprising from 1 to 12 carbon atoms;
- W is a bond or is a bridging group selected from the group consisting of divalent hydrocarbon groups comprising from 1 to 12 carbon atoms (preferably divalent aliphatic groups comprising from 1 to 6 carbon atoms) and divalent fluorocarbon groups comprising from 1 to 12 carbon atoms (preferably divalent perfluoroaliphatic groups comprising from 1 to 6 carbon atoms);
- the group sketched with symbol:

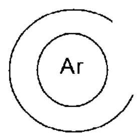

in formula (P-11) and (P-12) designates an aromatic mono- or poly-nuclear ring condensed to the pyridinium-type aromatic ring, which may comprise one or more additional nitrogen atoms, optionally quaternized nitrogen atoms , in the ring(s);

- each of $R^1_H$, $R^2_H$, $R^3_H$, $R^4_H$, $R^5_H$, $R^6_H$, $R^7_H$, $R^8_H$, $R^9_H$, $R^{10}_H$, $R^{11}_H$, $R^{12}_H$, $R^{13}_H$, $R^{14}_H$, $R^{15}_H$, R1$^6$H, $R^{17}_H$, $R^{18}_H$, $R^{19}_H$, $R^{20}_H$, $R^{21}_H$, $R^{22}_H$, $R^{23}_H$, $R^{24}_H$, $R^{25}_H$, $R^{26}_H$, $R^{27}_H$, $R^{28}_H$, $R^{29}_H$, $R^{30}_H$, $R^{31}_H$, $R^{32}_H$, $R^{33}_H$, $R^{34}_H$, $R^{35}_H$, $R^{36}_H$ and $R°_H$, equal to or different from each other, is independently at each occurrence -H or a group of formula [group (alpha-H)]:

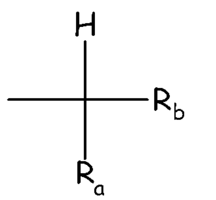

wherein $R_a$, and $R_b$, equal to or different from each other, are independently H or a hydrocarbon $C_1$-$C_6$ group;

- Y, equal to or different from each other, is independently oxygen or a $C_1$-$C_{12}$ hydrocarbon group, which can be notably an aliphatic or an aromatic group, which can comprise one or more than one heteroatoms selected from N, O, S and halogens;
- $A^{(m-)}$ is an anion having valency m;

with the proviso that

(i) when salt (P) is of formula (P-1) at least two of $R^1_H$, $R^2_H$, and $R°_H$ are groups (alpha-H);
(ii) when salt (P) is of formula (P-2) $R^3_H$ and $R^4_H$ are groups (alpha-H);
(iii) when salt (P) is of formula (P-3), at least two of $R^5_H$, $R^6_H$, $R^7_H$, and $R^8_H$ are groups (alpha-H);
(iv) when salt (P) is of formula (P-4), at least two of $R^9_H$, $R^{10}_H$, $R^{11}_H$, $R^{12}_H$ and $R°_H$ are groups (alpha-H);
(v) when salt (P) is of formula (P-5), at least two of $R^{13}_H$, $R^{14}_H$, and $R°_H$ are groups (alpha-H);

(vi) when salt (P) is of formula (P-6), at least two of $R^{15}_H$, R16H, $R^{17}_H$,and $R°_H$ are groups (alpha-H);
(vii) when salt (P) is of formula (P-7), at least two of $R^{18}_H$, $R^{19}_H$, $R^{20}_H$, $R^{21}_H$, and $R°_H$ are groups (alpha-H);
(viii) when salt (P) is of formula (P-8), at least two of $R^{22}_{H,}$ $R^{23}_{H,}$ $R^{24}_{H,}$ and $R°_H$ are groups (alpha-H);
(ix) when salt (P) is of formula (P-9), at least two of $R^{25}_H$, $R^{26}_H$, $R^{27}_H$, and $R^{28}_H$ are groups (alpha-H);
(x) when salt (P) is of formula (P-10), at least two of $R^{29}_H$, $R^{30}_H$, $R^{31}_H$, $R^{32}_H$, and $R^{28}_H$ are groups (alpha-H);
(xi) when salt (P) is of formula (P-11), at least two of $R^{33}_H$, $R^{34}_H$, and $R^{28}_H$ are groups (alpha-H);
(xii) when salt (P) is of formula (P-12), at least two of $R^{35}_H$, $R^{36}_H$ and $R°_H$ are groups (alpha-H).

In a second embodiment, the present invention relates to a method for fabricating shaped articles, comprising the use of the above mentioned composition (C).
In a third embodiment, the present invention also relates to cured articles obtained from the above mentioned composition (C).

**Brief description of drawings**

Figure 1 is a chart representing the cure behaviours of Example 1C(*) of comparison and Examples 4 and 5 according to the invention, characterized by Moving Die Rheometer (MDR), at 170°C.

**Description of embodiments**

For the purposes of this invention, the term "fluoroelastomer" [fluoroelastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer).
True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.
A first object of the invention is a fluoroelastomer composition [composition (C)] comprising:

- at least one vinylidene-fluoride based fluoroelastomer comprising recurring units derived from vinylidene fluoride (VDF) and from at least one additional (per)fluorinated monomer different from VDF [fluoroelastomer (A)];
- 0.30 to 2.50 phr based on 100 phr of fluoroelastomer (A) of at least one organic aromatic acid [acid (OA)] which is a compound comprising at least one aromatic ring and at least one acid group, which is linked to said aromatic ring via a sigma bond or a linking group, with the proviso that when the acid group is -COOH the aromatic ring does not comprise an -OH group in the para- or meta-position with respect to said acid group; and
- at least one pyridinium salt [salt (P)] complying with any of formulae (P1) to (P-12) as detailed above.

The composition may be free of any polyhydroxyaromatic compound crosslinking agent. The composition may typically be free of bisphenol crosslinking agents.
Fluoroelastomers (A) are in general amorphous products or products having a low degree of crystallinity (crystalline phase less than 20 % by volume) and a glass transition temperature ($T_g$) below room temperature. In most cases, the fluoroelastomer (A) has advantageously a $T_g$ below 10°C, preferably below 5°C, more preferably 0°C, even more preferably below -5°C.
Fluoroelastomer (A) typically comprises at least 15 mol %, preferably at least 20 mol %, more preferably at least 35 mol % of recurring units derived from VDF, with respect to all recurring units of the fluoroelastomer.
Fluoroelastomer (A) typically comprises at most 85 mol %, preferably at most 80 mol %, more preferably at most 78 mol % of recurring units derived from VDF, with respect to all recurring units of the fluoroelastomer.
Non limitative examples of suitable (per)fluorinated monomers different from VDF are notably:

(a) $C_2$-$C_8$ perfluoroolefins , such as tetrafluoroethylene (TFE) and hexafluoropropylene (HFP);
(b) hydrogen-containing $C_2$-$C_8$ olefins different from VDF, such as vinyl fluoride (VF), trifluoroethylene (TrFE), perfluoroalkyl ethylenes of formula $CH_2$ = CH-$R_f$, wherein $R_f$ is a $C_1$-$C_6$ perfluoroalkyl group;
(c) $C_2$-$C_8$ chloro and/or bromo and/or iodo-fluoroolefins such as chlorotrifluoroethylene (CTFE);
(d) (per)fluoroalkylvinylethers (PAVE) of formula $CF_2$=CFO$R_f$, wherein $R_f$ is a $C_1$-$C_6$ (per)fluoroalkyl group, e.g. $CF_3$, $C_2F_5$, $C_3F_7$;
(e) (per)fluoro-oxy-alkylvinylethers of formula $CF_2$ = CFOX, wherein X is a $C_1$-$C_{12}$ ((per)fluoro)-oxyalkyl comprising catenary oxygen atoms, e.g. the perfluoro-2-propoxypropyl group;

(f) (per)fluorodioxoles having formula :

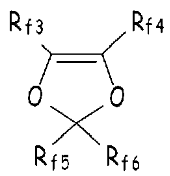

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. $-CF_3$, $-C_2F_5$, $-C_3F_7$, $-OCF_3$, $-OCF_2CF_2OCF_3$.

(g) (per)fluoro-methoxy-vinylethers (MOVE, hereinafter) having formula:

$$CFX_2 = CX_2OCF_2OR''_f$$

wherein $R''_f$ is selected among $C_1$-$C_6$ (per)fluoroalkyls , linear or branched; $C_5$-$C_6$ cyclic (per)fluoroalkyls; and $C_2$-$C_6$ (per) fluorooxyalkyls, linear or branched, comprising from 1 to 3 catenary oxygen atoms, and $X_2$ = F, H; preferably $X_2$ is F and $R''_f$ is $-CF_2CF_3$ (MOVE1); $-CF_2CF_2OCF_3$ (MOVE2); or $-CF_3$ (MOVE3).

Generally fluoroelastomer (A) will comprise recurring units derived from VDF and recurring units derived from HFP.

Fluoroelastomer (A) may optionally further comprise recurring units derived from one or more than one monomer free from fluorine (hydrogenated monomer, hereinafter). Examples of hydrogenated monomers are notably $C_2$-$C_8$ non-fluorinated olefins (Ol), in particular $C_2$-$C_8$ non-fluorinated alpha-olefins (Ol), including ethylene, propylene, 1-butene; diene monomers; styrene monomers; $C_2$-$C_8$ non-fluorinated alpha-olefins (Ol), and more particularly ethylene and propylene, will be selected for achieving increased resistance to bases.

Optionally, fluoroelastomer (A) may comprises recurring units derived from at least one bis-olefin [bis-olefin (OF)] having general formula :

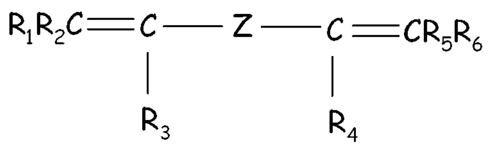

wherein $R_1$, $R_2$, $R_3$, $R_4$, $R_5$ and $R_6$, equal or different from each other, are H, a halogen, or a $C_1$-$C_5$ optionally halogenated group, possibly comprising one or more oxygen group; Z is a linear or branched $C_1$-$C_{18}$ optionally halogenated alkylene or cycloalkylene radical, optionally containing oxygen atoms, or a (per)fluoropolyoxyalkylene radical, e.g. as described in EP 661304 A (AUSIMONT SPA) 5/07/1995 .

The bis-olefin (OF) is preferably selected from the group consisting of those complying with formulae (OF-1), (OF-2) and (OF-3) :

(OF-1)

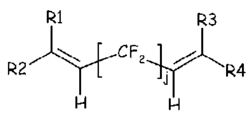

wherein j is an integer between 2 and 10, preferably between 4 and 8, and R1, R2, R3, R4, equal or different from each other, are H, For $C_{1-5}$ alkyl or (per)fluoroalkyl group;

(OF-2)

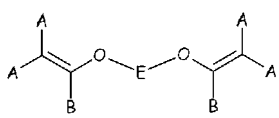

wherein each of A, equal or different from each other and at each occurrence, is independently selected from F, Cl, and

H; each of B, equal or different from each other and at each occurrence, is independently selected from F, Cl, H and $OR_B$, wherein $R_B$ is a branched or straight chain alkyl radical which can be partially, substantially or completely fluorinated or chlorinated; E is a divalent group having 2 to 10 carbon atom, optionally fluorinated, which may be inserted with ether linkages; preferably E is a $-(CF_2)_m-$ group, with m being an integer from 3 to 5; a preferred bis-olefin of (OF-2) type is $F_2C=CF-O-(CF_2)_5-O-CF=CF_2$.

(OF-3)

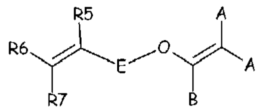

wherein E, A and B have the same meaning as above defined; R5, R6, R7, equal or different from each other, are H, For $C_{1-5}$ alkyl or (per)fluoroalkyl group.

Fluoroelastomers (A) suitable in the compositions of the invention may comprise, in addition to recurring units derived from VDF and HFP, one or more of the followings:

- recurring units derived from at least one bis-olefin [bis-olefin (OF)] as above detailed;
- recurring units derived from at least one (per)fluorinated monomer different from VDF and HFP; and
- recurring units derived from at least one hydrogenated monomer.

Among specific monomer compositions of fluoroelastomers (A) suitable for the purpose of the invention, mention can be made of fluoroelastomers having the following monomer compositions (in mol %) :

(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, bis-olefin (OF) 0-5 %;

(ii) vinylidene fluoride (VDF) 50-80 %, perfluoroalkyl vinyl ethers (PAVE) 5-50 %, tetrafluoroethylene (TFE) 0-20 %, bis-olefin (OF) 0-5 %;

(iii) vinylidene fluoride (VDF) 20-30 %, $C_2$-$C_8$ non-fluorinated olefins (Ol) 10-30 %, hexafluoropropene (HFP) and/or perfluoroalkyl vinyl ethers (PAVE) 18-27 %, tetrafluoroethylene (TFE) 10-30 %, bis-olefin (OF) 0-5 %;

(iv) tetrafluoroethylene (TFE) 45-65 %, $C_2$-$C_8$ non-fluorinated olefins (Ol) 20-55 %, vinylidene fluoride (VDF) 0.1-30 %, bis-olefin (OF) 0-5 %,

(v) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %, bis-olefin (OF) 0-5 %;

(vi) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, bis-olefin (OF) 0-5 %.

Organic aromatic acid [acid (OA)] is a compound comprising at least one aromatic ring and at least one acid group, which is linked to said aromatic ring via a sigma bond or a linking group, with the proviso that when the acid group is -COOH the aromatic ring does not comprise an -OH group in the para- or meta-position with respect to said acid group.

Preferably, said acid group is linked to said aromatic ring via a sigma bond.

Preferably, said acid group is selected from -COOH or $-SO_3H$. More preferably, said acid group is $-SO_3H$.

Hence, in certain embodiments the invention is a fluoroelastomer composition comprising:

- at least one fluoroelastomer (A);
- 0.30 to 2.50 phr based on 100 phr of fluoroelastomer (A) of at least one organic aromatic acid [acid (OA)] which is a compound comprising at least one aromatic ring and at least one acid $-SO_3H$ group, which is linked to said aromatic ring via a sigma bond or a linking group; and
- at least one salt (P) as detailed above.

Preferably, organic aromatic acid [acid (OA)] comprises one electron donating group (also referred to as electron releasing group) in the para-position with respect to said acid group.

More preferably, said electron donating group is selected from C1-C5 alkyl, such as $-CH_3$, $-CH_2CH_3$, and -OH, most preferably the electron donating group is selected from C1-C5 alkyls, preferably $-CH_3$ and $-CH_2CH_3$

Even more preferably, said acid (OA) is selected from p-toluenesulfonic acid.

Advantageously, composition (C) comprises acid (OA) in an amount from 0.30 to 2.20 weight parts (phr) per 100 weight parts (phr) of fluoroelastomer (A), even from 0.30 to 2.10 phr per 100 phr of fluoroelastomer (A) or even 0.30 to 2.00

phr per 100 phr of fluoroelastomer (A).

Good results have been obtained with p-toluenesulfonic acid in an amount from 0.30 to 1.00 phr, preferably from 0.30 to 0.80 phr per 100 phr of fluoroelastomer (A).

Preferred salts (P) of formula (P-1) are those complying with formulae (P-1-a) to (P-1-e):

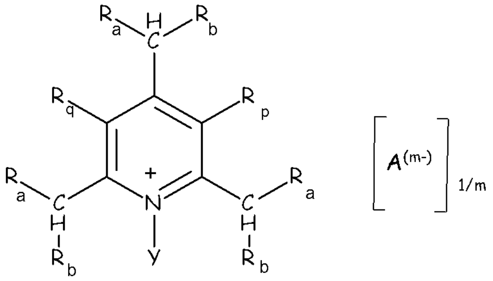
(P-1-a)

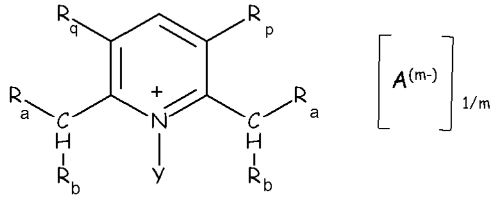
(P-1-b)

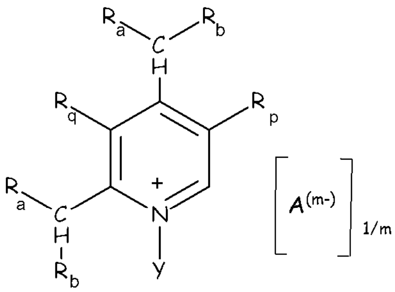
(P-1-c)

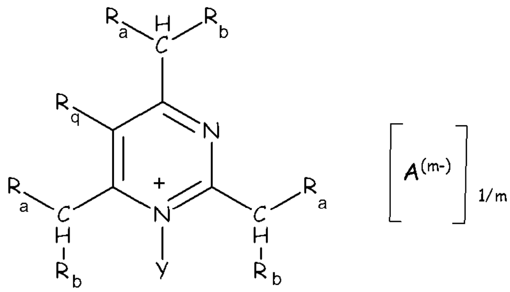
(P-1-d)

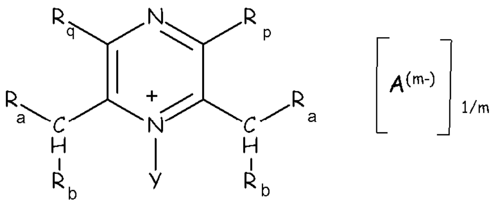
(P-1-e)

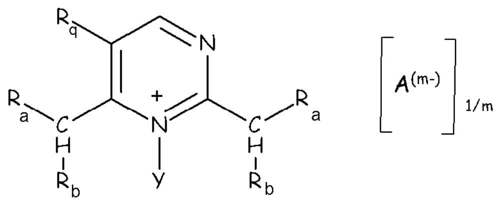
(P-1-f)

wherein:

- $R_a$ and $R_b$ have the meaning as above defined, preferably $R_a$ and $R_b$ are H;
- Y has the meaning as defined above, preferably Y is methyl;
- each of $R_p$ and $R_q$, equal to or different from each other, is H or a $C_1$-$C_{12}$ hydrocarbon group;
- A and m have the meanings as defined above.

More preferably, salts (P) of formula (P-1) are those having any of formulae (P-1-g) to (P-1-p):

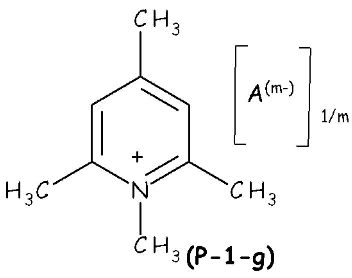
(P-1-g)

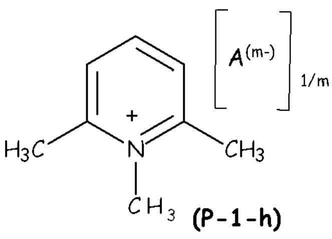
(P-1-h)

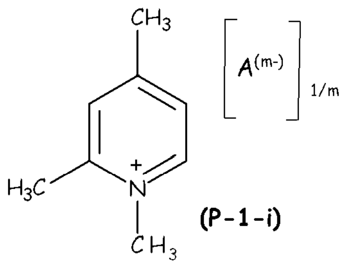
(P-1-i)

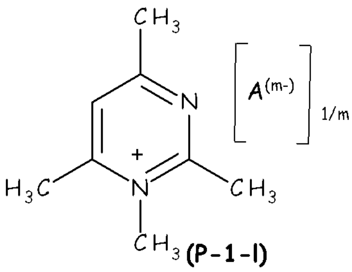
(P-1-l)

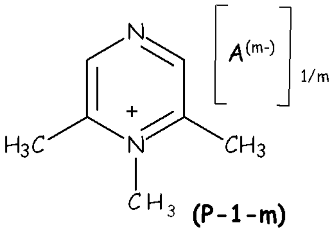
(P-1-m)

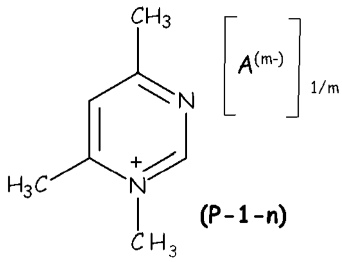
(P-1-n)

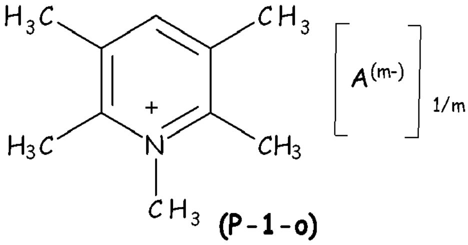
(P-1-o)

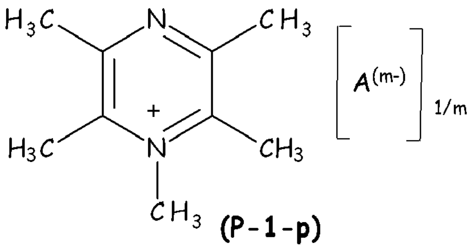
(P-1-p)

wherein A and m have the meaning as defined above.

Preferred salts (P) of formula (P-2) are those complying with formula (P-2-a):

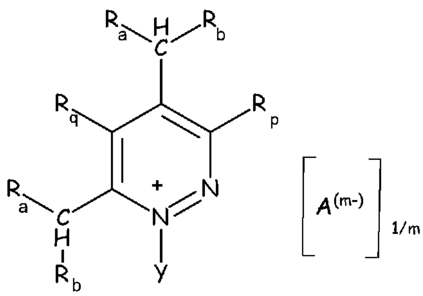
(P-2-a)

wherein:

- $R_a$ and $R_b$ have the meaning as above defined, preferably $R_a$ and $R_b$ are H;
- Y has the meaning as defined above, preferably Y is methyl;
- each of $R_p$ and $R_q$, equal to or different from each other, is H or a $C_1$-$C_{12}$ hydrocarbon group;
- A and m have the meanings as defined above.

More preferably, salts (P) of formula (P-2) are those having formula (P-2-b)

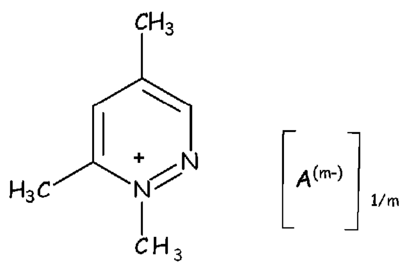
(P-2-b)

wherein A and m have the meaning as defined above.

Preferred salts (P) of formula (P-3) are those complying with formula (P-3-a):

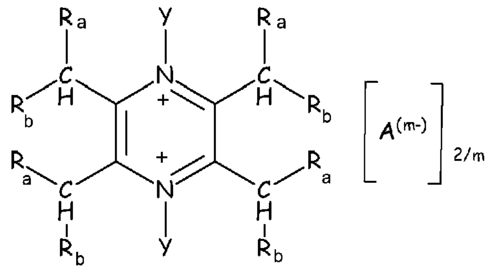

(P-3-a)

wherein:

- $R_a$ and $R_b$ have the meaning as above defined, preferably $R_a$ and $R_b$ are H;
- Y has the meaning as defined above, preferably Y is methyl;
- A and m have the meanings as defined above.

More preferably, salts (P) of formula (P-3) are those having formula (P-3-b)

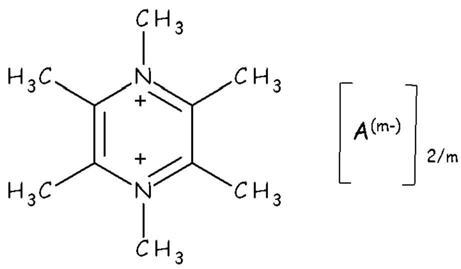

(P-3-b)

wherein A and m have the meaning as defined above.

Preferred salts (P) of formula (P-4) are those complying with formula (P-4-a):

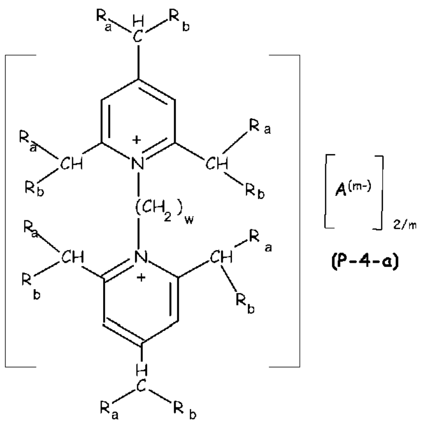

(P-4-a)

wherein:

- $R_a$ and $R_b$ have the meaning as above defined, preferably $R_a$ and $R_b$ are H;
- w is an integer of 1 to 12, preferably of 1 to 6, most preferably equal to 3;
- A and m have the meanings as defined above.

More preferably, salts (P) of formula (P-4) are those having formula (P-4-b) or (P-4-c):

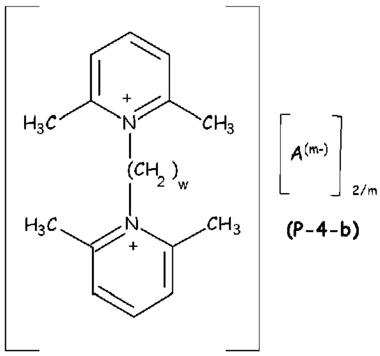

(P-4-b)

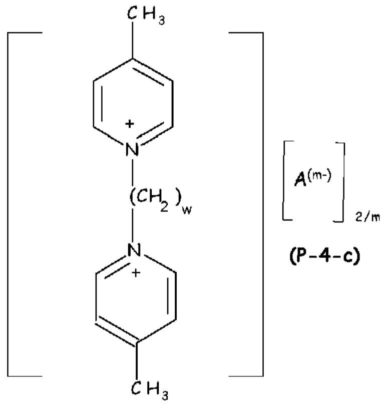

(P-4-c)

wherein A , and m have the meaning as defined above, and w = 3.

Preferred salts (P) of formula (P-5) are those complying with formula (P-5-a):

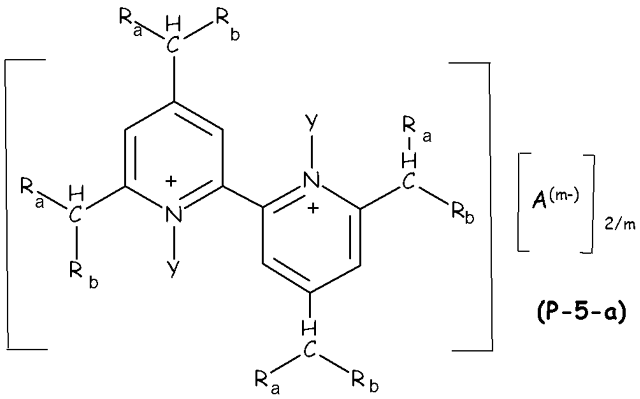

(P-5-a)

wherein:

- $R_a$ and $R_b$ have the meaning as above defined, preferably $R_a$ and $R_b$ are H;
- Y has the meaning as defined above, preferably Y is methyl;
- A and m have the meanings as defined above.

More preferably, salts (P) of formula (P-5) are those having formula (P-5-b) or (P-5-c):

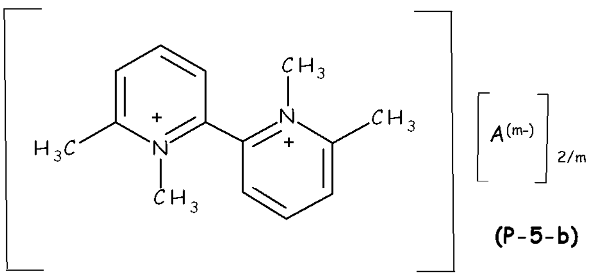

(P-5-b)

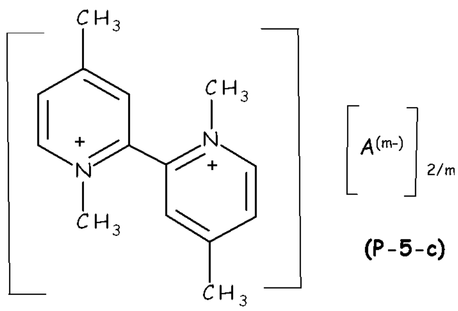

(P-5-c)

wherein A and m have the meaning as defined above.

Preferred salts (P) of formula (P-11) are those complying with formula (P-11-a):

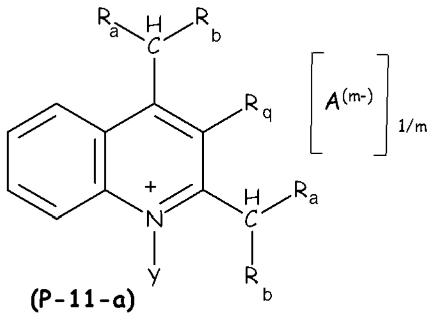

(P-11-a)

wherein:

- $R_a$ and $R_b$ have the meaning as above defined, preferably $R_a$ and $R_b$ are H;
- Y has the meaning as defined above, preferably Y is methyl;
- A and m have the meanings as defined above.

More preferably, salts (P) of formula (P-11) are those having formula (P-11-b):

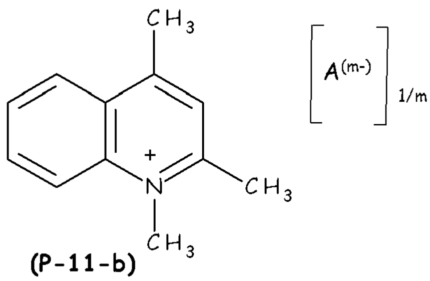

(P-11-b)

wherein A and m have the meaning as defined above.

Preferred salts (P) of formula (P-12) are those complying with formula (P-12-a):

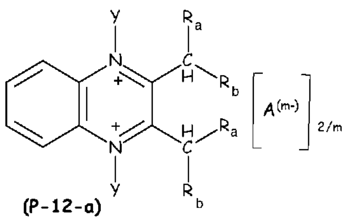

(P-12-a)

wherein:

- $R_a$ and $R_b$ have the meaning as above defined, preferably $R_a$ and $R_b$ are H;
- Y has the meaning as defined above, preferably Y is methyl;
- A and m have the meanings as defined above.

More preferably, salts (P) of formula (P-12) are those having formula (P-12-b):

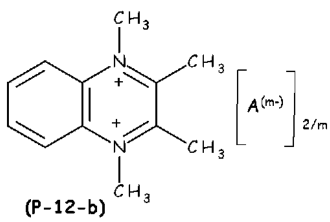

(P-12-b)

wherein A and m have the meaning as defined above.

The choice of the anion A in formulae (P-1) to (P-12) is not particularly critical; it is nevertheless understood that

anions selected from the group consisting of arylsulfonates, in particular, tosylate (p-toluensulfonate), (fluoro)alkyl sulfonates having a $C_1$-$C_6$ (fluoro)alkyl chain, including fluorine-free alkyl sulfonates e.g. mesylate (methansulfonate) and fluorine containing (especially perfluorinated) alkyl sulfonates, e.g. triflate (trifluoromethansulfonate); halides (iodide, bromide, chloride) are particularly preferred because of their prompt accessibility from synthetic perspective.

As a whole, exemplary compounds which have been found particular utility in the composition of the present invention are those listed below having formulae (Ex-1) to (Ex-9):

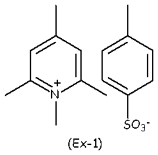
(Ex-1)
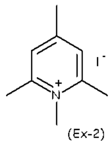
(Ex-2)
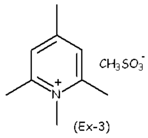
(Ex-3)
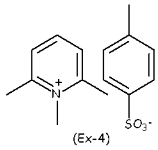
(Ex-4)
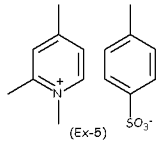
(Ex-5)
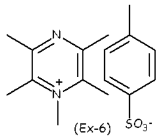
(Ex-6)
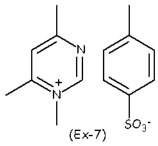
(Ex-7)
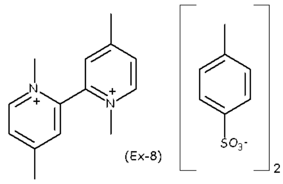
(Ex-8)
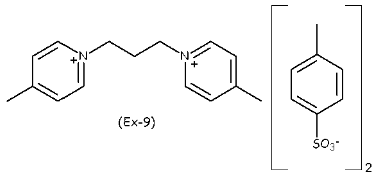
(Ex-9)

The composition of the invention generally comprises salt (P) in an amount of at least 0.1, preferably at least 0.5, more preferably at least 1 phr per 100 phr of fluoroelastomer (A).

The composition of the invention generally comprises salt (P) in an amount of at most 20, preferably at most 15, more preferably at most 10 phr per 100 phr of fluoroelastomer (A).

Optionally, composition (C) of the invention comprises at least one basic compound [base (B)]

The base (B) suitable for being used in the composition (C) of the present invention is not particularly limited.

Base (B) can be selected from organic bases, inorganic bases or mixtures of at least one organic and at least one inorganic bases.

Among inorganic bases [bases (IB)] mention can be notably made of:

(i) divalent metal oxides, in particular oxides of alkali-earth metals or oxides of Zn, Mg, Pb, Ca, including specifically MgO, PbO and ZnO;
(ii) hydroxides of metals, in particular hydroxides of monovalent and divalent metals, specifically hydroxides of alkali and alkali-earth metals, in particular hydroxides selected from the group consisting of $Ca(OH)_2$, $Sr(OH)_2$, and $Ba(OH)_2$;
(iii) metal salts of weak acids having a $pK_a$ higher than 3, in particular weak acids selected from the group consisting of carbonates, benzoates, oxalates and phosphites; in particular carbonates, benzoates, oxalates and phosphites salts with Na, K, Ca, Sr, Ba.

Among inorganic bases, $Ca(OH)_2$ has been found to be particularly effective.

Among organic based [bases (OB)] mention can be notably made of:

(j) non-aromatic amines or amides complying with general formula (B1m) or (B1d):

$$R_{bm}\text{-}[C(O)]_t\text{-}NR^H{}_2 \qquad \text{(B1m)}$$

$$R^H{}_2N\text{-}[C(O)]_{t'}\text{-}R_{dm}\text{-}[C(O)]_{t''}\text{-}NR^H{}_2 \qquad \text{(B1d)}$$

wherein:

- each of t, t' and t", equal to or different from each other and at each occurrence is zero or 1;
- each of $R^H$ is independently H or a $C_1$-$C_{12}$ hydrocarbon group;
- $R_{bm}$ is a monovalent hydrocarbon non-aromatic group having 1 to 30 carbon atoms;
- $R_{bm}$ is a divalent hydrocarbon non-aromatic group having 1 to 30 carbon atoms; and

(jj) cycloaliphatic secondary or tertiary amines complying with general formula (B2m) or (B2d):

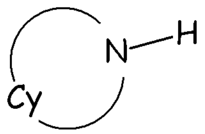 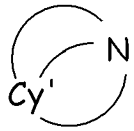

(B2m) (B2d)

wherein:

- Cy represents a divalent aliphatic group comprising at least 4 carbon atoms, optionally comprising one or more than one ethylenically unsaturated double bond, and optionally comprising one or more catenary nitrogen atoms, forming a cycle with the nitrogen atom which is connected thereto;
- Cy' represent a trivalent aliphatic group comprising at least 5 carbon atoms, optionally comprising one or more than one ethylenically unsaturated double bond, and optionally comprising one or more catenary nitrogen atoms, forming a cycle with the nitrogen atom which is connected thereto;

(jjj) aromatic amines or amides complying with general formula (B3):

$$Ar_b\text{-}\{[C(O)]_t\text{-}NR^H{}_2\}_w, \qquad (B3)$$

wherein:

- t, equal to or different from each other and at each occurrence, is zero or 1;
- w is an integer of 1 to 4;
- each of $R^H$ is independently H or a $C_1$-$C_{12}$ hydrocarbon group;
- $Ar_b$ is a mono- or poly-nuclear aromatic group, possibly comprising one or more than one catenary heteroatoms selected from the group consisting of S and O;

(jv) heteroaromatic amines comprising at least one nitrogen atom comprised in a heteroaromatic cycle, in particular pyridine derivatives, preferably trimethylpyridine isomers;
(v) guanidine derivatives of formula (B4) or (B5):

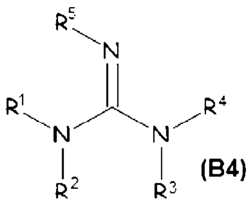 **(B4)** 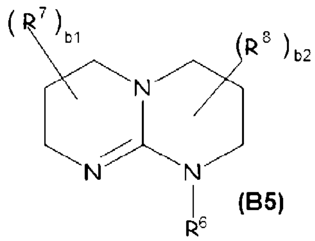 **(B5)**

wherein:

- each of $R^1$, $R^2$, $R^3$, $R^4$, $R^5$, $R^6$, $R^7$, and $R^8$, equal to or different from each other, is independently H or a $C_1$-$C_{12}$ hydrocarbon group and corresponding salts of said guanidines (B4) and (B5), in particular corresponding N-quaternized hydrohalides (preferably hydrochlorides);

(vj) metal alkoxylates, preferably alkoxylates of aliphatic alcohols, more preferably potassium terbutylate, sodium ethylate and sodium methylate.

Among bases of formulae (B1m) and (B1d), those wherein:

- $R_{bm}$ is a monovalent aliphatic linear group having 6 to 30 carbon atoms, possibly comprising one or more than one ethylenically unsaturated double bond; and
- $R_{dm}$ is a divalent aliphatic linear group having 6 to 30 carbon atoms, possibly comprising one or more than one ethylenically unsaturated double bond, are particularly preferred.

Among said non-aromatic amines or amides complying with general formula (B3), mention can be particularly made of:

- octadecylamine of formula $CH_3(CH_2)_{17}$-$NH_2$;
- erucamide of formula $H_2N$-C(O)-$(CH_2)_{11}$-CH=CH-$(CH_2)_7CH_3$;
- oleamide of formula $H_2N$-C(O)-$(CH_2)_7$-CH=CH-$(CH_2)_7CH_3$;
- hexamethylenediamine of formula $H_2N$-$(CH_2)_6$-$NH_2$;
- N,N-dimethyloctylamine;
- N,N-dimethyldodecylamine;
- trioctylamine;
- trihexylamine.

Among the said cycloaliphatic secondary or tertiary amines complying with general formula (B2m) or (B2d), mention can be made of 1,8-diazabicycloundec-7-ene (DBU) of formula:

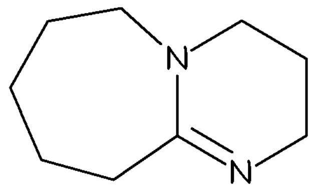

Exemplary embodiments of said guanidine derivatives of formula (B-4) are notably guanidine hydrochloride and di-o-tolylguanidine.

The amount of base (B) will be adjusted by one of ordinary skills in the art, taking into account the nature and basicity of base (B) used.

It is nevertheless understood that the composition (C) generally comprises from 0.2 to 20, preferably from 6 to 16 weight parts of said base (B) (organic and/or inorganic, as above detailed) per 100 weight parts of fluoroelastomer (A).

According to certain preferred embodiments, composition (C) comprises at least one organic base and at least one inorganic base.

In these circumstances, composition (C) generally comprises from 0.1 to 10, preferably from 6 to 16 weight parts of said inorganic base and/or generally , from 0.1 to 10, preferably from 6 to 16 weight parts of said organic base, these weight parts being referred to 100 weight parts of fluoroelastomer (A).

The composition (C) may additionally comprise one or more than one organic solvents [solvent (S)].

Said organic solvent is preferably selected from those wherein the used salt (P) has a solubility at room temperature exceeding 1 g/l, more preferably 10 g/l.

Non-limitative examples of solvents (S) which can be used are notably:

- polar aprotic organic solvents, selected preferably from the group consisting of sulfolane, 4,4'-dichlorodiphenylsulfone;
- ionic liquids, selected preferably from the group consisting of methylpyrrolidinium bis(trifluoromethansulonylimide) of formula PY1,4-$Tf_2N$ and 1-butyl-3-methylimidazolium bis(trifluoromethylsulfonylimide) of formula BMIm-$Tf_2N$:

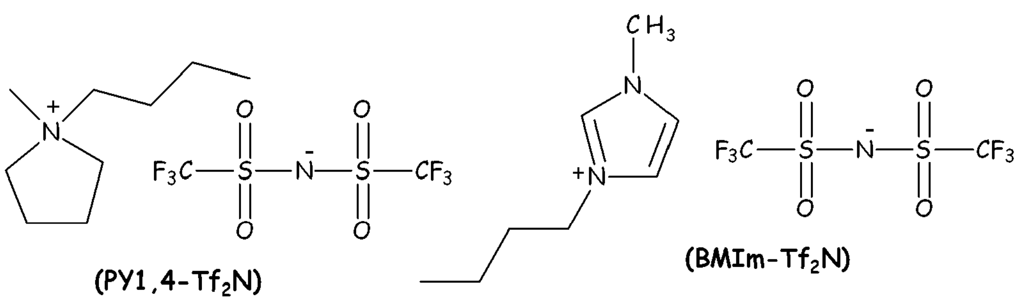

**(PY1,4-$Tf_2N$)** **(BMIm-$Tf_2N$)**

Also, other conventional additives, such as reinforcing fillers (e.g. carbon black), thickeners, pigments, antioxidants, stabilizers and the like, may then be added to the composition (C).

The invention also pertains to a method of using the composition (C), as above described, for fabricating shaped articles.

The composition (C) can be fabricated, e.g. by moulding (injection moulding, extrusion moulding), calendering, or extrusion, into the desired shaped article, which is advantageously subjected to vulcanization (curing) during the processing itself and/or in a subsequent step (post-treatment or post-cure), advantageously transforming the relatively soft, weak, fluoroelastomer (A) into a finished article made of non-tacky, strong, insoluble, chemically and thermally resistant cured fluoroelastomer.
Finally, the invention pertains to cured articles obtained from the composition (C), as detailed above.
The cured articles can be notably pipes, joints, O-ring, hose, and the like.
The invention will be now described with reference to the following examples, whose purpose is merely illustrative and not intended to limit the scope of the invention.

**Experimental Section**

**Materials**

VDF-HFP copolymer commercially available under trade name TECNOFLON(R) 90HS from Solvay Specialty Polymers Italy S.p.A. (FKM-1, hereinafter) was used as base fluoroelastomer.
MAGLITE® DE high surface area, high activity magnesium oxide (MgO, hereinafter) was obtained from Merck.
RHENOFIT® CF (GE 1890) calcium hydroxide (Ca(OH)2, hereinafter) was obtained from Rhein Chemie.
Reinforcing filler Carbon black N990MT was obtained from Cancarb (NT990, hereinafter).
Guanidine, p-toluensulfonic acid and 4-hydroxybenzoic acid were obtained by Merck Sigma Aldrich

**Methods**

**Characterization of cure behaviour**

The cure behaviour was characterized by Moving Die Rheometer (MDR), at 170°C and at 180°C, by determining the following properties:

$$M_L = \text{Minimum torque (lb x in)}$$

$$M_H = \text{Maximum torque (lb x in)}$$

$$\Delta M = M_H - M_L \text{ (lb x in)}$$

ts2 = time for the viscosity to increase of 2 units above $M_L$
Plaques and O-rings (size class = 214) have been cured in a pressed mould and then post-treated in an air circulating oven under the following conditions:

- moulding = 90 minutes @170°C
- postcure = (8+16 hours) @230°C

The Mooney scorch time was determined at 135°C according to ASTM D1646 using Alpha Technologies Mooney MV200.

**Mechanical properties**

The tensile properties were determined on specimens punched out from the plaques, according to the ASTMD412C Standard at 23°C.

T.S. = tensile strength in MPa
M 50 = tensile strength in MPa at an elongation of 50 %
M 100 = tensile strength in MPa at an elongation of 100 %
E.B. = elongation at break in %.

Shore A hardness (3") (HDS) was determined on 3 pieces of plaque piled according to the ASTM D 2240 method.

The compression set (C-SET) was determined on O-ring, specimen standard AS568A (type 214) or on 6 mm buttons (type 2), according to the ASTM D 395, method B, at 200°C for 70h.

**Preparative Example A - 1,2,4,6-tetramethyl-pyridinium p-toluenesulphonate [same as Preparative Example 1 in** WO 2016/180660**]**

A three-necked round bottom flask equipped with a thermometer, condenser and stirring was charged with $CH_2Cl_2$ (85 ml) and methyl-p-toluenesulphonate (25.50 g). Then 2,4,6 trimethylpyridine (16.59 g) was added dropwise at room temperature. The reaction was stirred at 50°C and, after 22 hours, it was completed. The liquid phase was removed by evaporation under vacuum obtaining a white powder that was dispersed in diethyl-ether (50 ml) under stirring. The liquid phase was filtered off and 39.13 g of pure product was recovered as a white powder in 93% yield (melting point 161°C; 1% weight loss: 266°C).

$^1H$ NMR (solvent $D_2O$, TMS reference): +7.70 ppm (d; 2H; ortho-H; p-toluenesulfonate); +7.55 (s; 2H; meta-H; 1,2,4,6-tetramethyl-pyridinium); +7.39 (d; $^2H$; meta-H; p-toluenesulfonate); +4.0 (s; 3H; $NCH_3$; 1,2,4,6-tetramethyl-pyridinium); +2.74 (s; 6H; ortho-CH3; 1,2,4,6-tetramethyl-pyridinium); 2.53 (s; 3H; para-$CH_3$; 1,2,4,6-tetramethyl-pyridinium); +2.44 ppm (s; 3H; para-$CH_3$; p-toluenesulfonate).

**Preparative Example B - Compounding procedure**

The salt (P) of preparative example A above was compounded between rolls to prepare curable compounds in combination with the other ingredients in the amounts (in phr) listed in the following Table 1.

Table 1

| Ingredient | Ex.1C (*) | Ex.2C (*) | Ex.3C (*) | Ex.4C (*) | Ex. 1 | Ex. 2 | Ex. 3 | Ex. 4 | Ex. 5C (*) | Ex. 6C (*) |
|---|---|---|---|---|---|---|---|---|---|---|
| Elastomer | 100.0 | 100.0 | 100.0 | 100.0 | 100.0 | 100.0 | 100.0 | 100.0 | 100.0 | 100.0 |
| p-toluene sulfonic acid | - | - | 0.10 | 0.20 | 0.30 | 0.50 | 0.60 | 0.75 | - | - |
| 4-hydroxy benzoic acid | - | - | - | - | - | - | - | - | 1.03 | 2.06 |
| Pyridinium salt | 1.83 | 1.83 | 1.83 | 1.83 | 1.83 | 1.83 | 1.83 | 1.83 | 1.83 | 1.83 |
| N990 MT | 30.00 | 30.00 | 30.00 | 30.00 | 30.00 | 30.00 | 30.00 | 30.00 | 30.00 | 30.00 |
| Maglite DE | 3.00 | - | 3.00 | 3.00 | 3.00 | 3.00 | 3.00 | 3.00 | 3.00 | 3.00 |
| Rhenofit CF | 6.00 | 4.00 | 6.00 | 6.00 | 6.00 | 6.00 | 6.00 | 6.00 | 6.00 | 6.00 |
| Guanidine | - | 0.50 | - | - | - | - | - | - | - | - |
| (*) comparison | | | | | | | | | | |

The results of mechanical properties, the viscosity and scorch of the above compositions are summarized in the following Table 2.

Table 2

| | Ex.1C (*) | Ex.2C (*) | Ex.3C (*) | Ex. 4C (*) | Ex. 1 | Ex. 2 | Ex.3 | Ex. 4 | Ex. 5C (*) | Ex. 6C (*) |
|---|---|---|---|---|---|---|---|---|---|---|
| Mooney viscosity (MU) | 109.0 | - | 97.0 | 87.0 | 82.0 | 77.0 | 79.0 | - | 85.0 | 83.5 |
| | Curing rate 30 min @170°C | | | | | | | | | |
| ML (b*in) | 1.6 | 1.4 | 1.3 | 1.1 | 1.1 | 1.0 | 1.1 | - | 1.4 | 1.6 |
| MH (b*in) | 14.1 | 13.5 | 14.3 | 14.5 | 14.2 | 13.2 | 13.8 | - | 16.5 | 16.2 |
| ts2 (s) | 95.0 | 43.0 | 96.0 | 100.0 | 117.0 | 145.0 | 135.0 | - | 113.0 | 162.0 |

(continued)

| | Mooney Scorch @135°C | | | | | | | | | |
|---|---|---|---|---|---|---|---|---|---|---|
| MS scorch (min) | 7.35 | - | - | - | - | - | 12.35 | - | 12.70 | 31.00 |
| | Mechanical properties @23°C | | | | | | | | | |
| T.S. (MPa) | 15.5 | 13.9 | - | - | - | - | 14.6 | 14.8 | 13.4 | - |
| M50 (MPa) | 2.7 | 3.0 | - | - | - | - | 3.2 | 3.1 | 3.4 | - |
| M100(MPa | 6.0 | 7.2 | - | - | - | - | 7.4 | 7.5 | 6.6 | - |
| E.B.(%) | 216 | 168 | - | - | - | - | 167 | 164 | 200 | - |
| Hardness (shore A) | 73 | 73 | - | - | - | - | 76 | 76 | 76 | - |
| C-SET (%) | 47.6 | 35 | - | - | - | - | 27.4 | 30.1 | 46.0 | - |
| (*) comparison | | | | | | | | | | |

The data in Table 2 (Ex. 3 vs Ex. 5C) show that higher amounts of p-hydroxybenzoic acid are needed to increase the scorch time but the C-SET of the resulting compositions is negatively impacted.

For further comparison, two compositions were prepared comprising the salt (P) of preparative example A above with an aliphatic acid.

The ingredients were compounded between rolls to prepare curable compounds in combination with the other ingredients in the amounts (in phr) listed in the following Table 3.

Table 3

| Ingredient | Ex.7C (*) | Ex.8C (*) |
|---|---|---|
| Elastomer | 100.00 | 100.00 |
| | 0.5 | 1.00 |
| Pyridinium salt | 1.83 | 1.83 |
| N990 MT | 30.00 | 30.00 |
| Maglite DE | 3.00 | 3.00 |
| Rhenofit CF | 6.00 | 6.00 |
| Properties | | |
| Mooney viscosity (MU) | 86.0 | 83.0 |
| Curing rate 30 min @170°C | | |
| ML (b*in) | 1.2 | 1.1 |
| MH (b*in) | 19.2 | 22.7 |
| ts2 (s) | 92.0 | 91.0 |
| Mooney Scorch @135°C | | |
| MS scorch time (min) | 8.60 | 9.45 |
| (*) comparison | | |

The results in Table 3 showed that the use of stearic acid did not positively affect the MS scorch time of the compositions.

## Claims

**1.** A fluoroelastomer composition [composition (C)] comprising:

- at least one vinylidene-fluoride based fluoroelastomer comprising recurring units derived from vinylidene fluoride (VDF) and from at least one additional (per)fluorinated monomer different from VDF [fluoroelastomer (A)];
- 0.30 to 2.50 phr based on 100 phr of fluoroelastomer (A) of at least one organic aromatic acid [acid (OA)] which is a compound comprising at least one aromatic ring and at least one acid group, which is linked to said aromatic ring via a sigma bond or a linking group, with the proviso that when the acid group is -COOH the aromatic ring does not comprise an -OH group in the para- or meta-position with respect to said acid group; and
- at least one pyridinium salt [salt (P)] complying with any of formulae (P1) to (P-12):

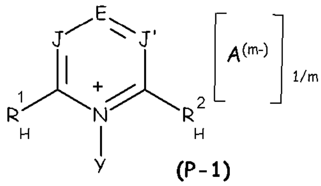
(P-1)

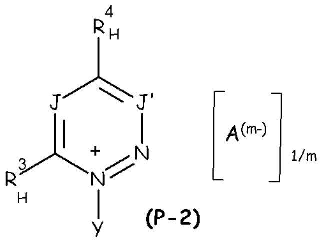
(P-2)

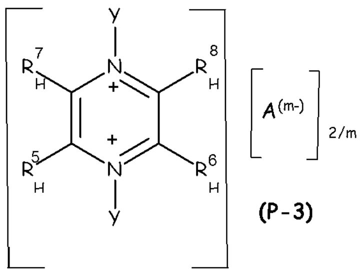
(P-3)

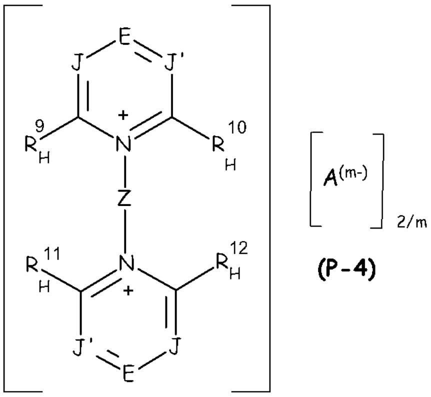
(P-4)

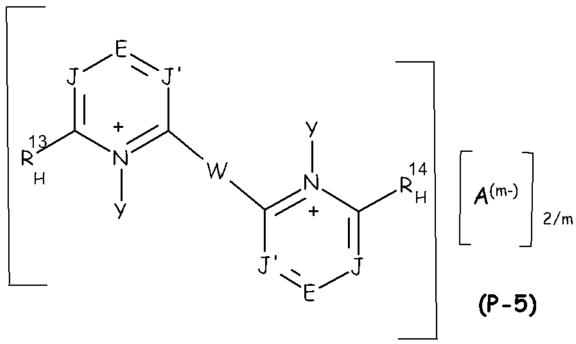
(P-5)

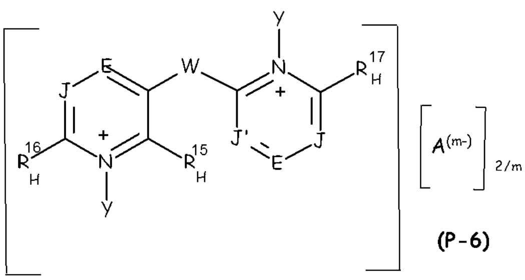
(P-6)

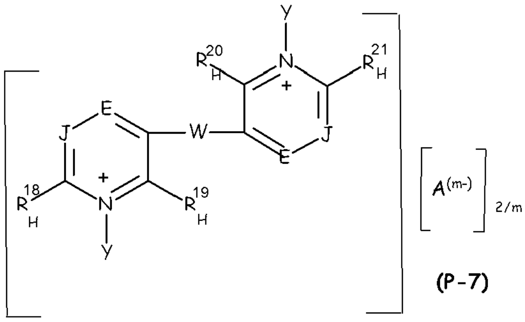
(P-7)

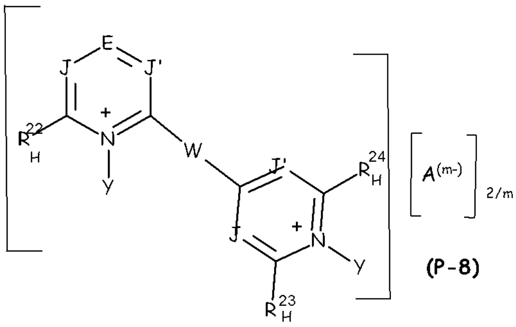
(P-8)

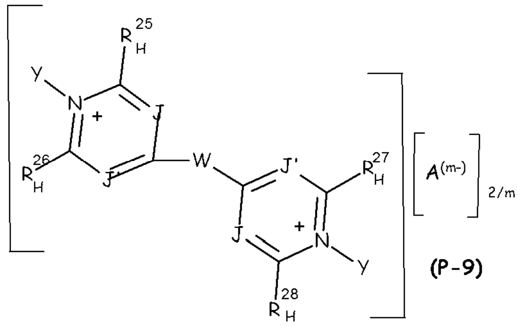
(P-9)

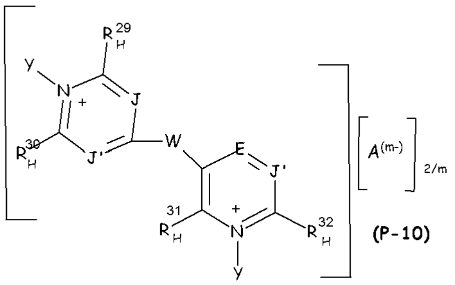
(P-10)

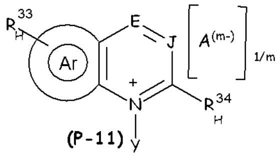
(P-11)

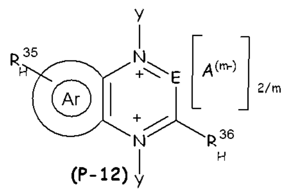
(P-12)

wherein:

- each of J and J', equal to or different from each other, is independently at each occurrence C-R* or N, wherein R* is H or a $C_1$-$C_{12}$ hydrocarbon group;
- E is N or a group of formula C-$R°_H$;
- Z is a divalent hydrocarbon group comprising from 1 to 12 carbon atoms;
- W is a bond or is a bridging group selected from the group consisting of divalent hydrocarbon groups comprising from 1 to 12 carbon atoms (preferably divalent aliphatic groups comprising from 1 to 6 carbon atoms) and divalent fluorocarbon groups comprising from 1 to 12 carbon atoms (preferably divalent perfluoroaliphatic groups comprising from 1 to 6 carbon atoms);
- the group sketched with symbol:

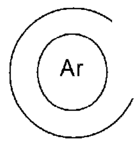

in formula (P-11) and (P-12) designates an aromatic mono- or poly-nuclear ring condensed to the pyridinium-type aromatic ring, which may comprise one or more additional nitrogen atoms, optionally quaternized nitrogen atoms , in the ring(s);

- each of $R^1_H$, $R^2_H$, $R^3_H$, $R^4_H$, $R^5_H$, $R^6_H$, $R^7_H$, $R^8_H$, $R^9_H$, $R^{10}_H$, $R^{11}_H$, $R^{12}_H$, $R^{13}_H$, $R^{14}_H$, $R^{15}_H$, $R^{16}_H$, $R^{17}_H$, $R^{18}_H$, $R^{19}_H$, $R^{20}_H$, $R^{21}_H$, $R^{22}_H$, $R^{23}_H$, $R^{24}_H$, $R^{25}_H$, $R^{26}_H$, $R^{27}_H$, $R^{28}_H$, $R^{29}_H$, $R^{30}_H$, $R^{31}_H$, $R^{32}_H$, $R^{33}_H$, $R^{34}_H$, $R^{35}_H$, $R^{36}_H$ and $R°_H$, equal to or different from each other, is independently at each occurrence -H or a group of formula [group (alpha-H)]:

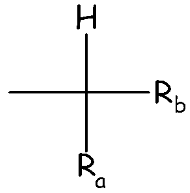

wherein $R_a$, and $R_b$, equal to or different from each other, are independently H or a hydrocarbon $C_1$-$C_6$

group;

- Y, equal to or different from each other, is independently oxygen or a $C_1$-$C_{12}$ hydrocarbon group, which can be notably an aliphatic or an aromatic group, which can comprise one or more than one heteroatoms selected from N, O, S and halogens;
- $A^{(m-)}$ is an anion having valency m;

with the proviso that

(i) when salt (P) is of formula (P-1) at least two of $R^1_H$, $R^2_H$, and $R°_H$ are groups (alpha-H);
(ii) when salt (P) is of formula (P-2) $R^3_H$ and $R^4_H$ are groups (alpha-H);
(iii) when salt (P) is of formula (P-3), at least two of $R^5_H$, $R^6_H$, $R^7_H$, and $R^8_H$ are groups (alpha-H);
(iv) when salt (P) is of formula (P-4), at least two of $R^9_H$, $R^{10}_H$, $R^{11}_H$, $R^{12}_{H,}$ and $R°_4$ are groups (alpha-H);
(v) when salt (P) is of formula (P-5), at least two of $R^{13}_{H,}$ $R^{14}_H$, and $R°_H$ are groups (alpha-H);
(vi) when salt (P) is of formula (P-6), at least two of $R^{15}_H$, $R^{16}_H$, $R^{17}_H$,and $R°_H$ are groups (alpha-H);
(vii) when salt (P) is of formula (P-7), at least two of $R^{18}$H, $R^{19}$H, $R^{20}_H$, $R^{21}_H$, and $R°_H$ are groups (alpha-H);
(viii) when salt (P) is of formula (P-8), at least two of $R^{22}_{H,}$ $R^{23}_{H,}$ $R^{24}_{H,}$ and $R°_H$ are groups (alpha-H);
(ix) when salt (P) is of formula (P-9), at least two of $R^{25}_H$, $R^{26}_H$, $R^{27}_H$, and $R^{28}_H$ are groups (alpha-H);
(x) when salt (P) is of formula (P-10), at least two of $R^{29}_H$, $R^{30}_H$, $R^{31}_H$, $R^{32}_H$, and $R^{28}_H$ are groups (alpha-H);
(xi) when salt (P) is of formula (P-11), at least two of $R^{33}_H$, $R^{34}_H$, and $R^{28}_H$ are groups (alpha-H);
(xii) when salt (P) is of formula (P-12), at least two of $R^{35}_H$, $R^{36}_H$ and $R°_H$ are groups (alpha-H).

**2.** Composition (C) according to Claim 1, wherein fluoroelastomer (A) comprises at least 15 mol %, preferably at least 20 mol %, more preferably at least 35 mol % of recurring units derived from VDF, with respect to all recurring units of the fluoroelastomer and/or at most 5 mol %, preferably at most 80 mol %, more preferably at most 78 mol % of recurring units derived from VDF, with respect to all recurring units of the fluoroelastomer.

**3.** Composition (C) according to Claim 1 or 2, wherein said at least one (per)fluorinated monomer different from VDF is selected in the group comprising, preferably consisting of:

(a) $C_2$-$C_8$ perfluoroolefins , such as tetrafluoroethylene (TFE) and hexafluoropropylene (HFP);
(b) hydrogen-containing $C_2$-$C_8$ olefins different from VDF, such as vinyl fluoride (VF), trifluoroethylene (TrFE), perfluoroalkyl ethylenes of formula $CH_2 = CH-R_f$, wherein $R_f$ is a $C_1$-$C_6$ perfluoroalkyl group;
(c) $C_2$-$C_8$ chloro and/or bromo and/or iodo-fluoroolefins such as chlorotrifluoroethylene (CTFE);
(d) (per)fluoroalkylvinylethers (PAVE) of formula $CF_2$=$CFOR_f$, wherein $R_f$ is a $C_1$-$C_6$ (per)fluoroalkyl group, e.g. $CF_3$, $C_2F_5$, $C_3F_7$;
(e) (per)fluoro-oxy-alkylvinylethers of formula $CF_2$ = CFOX, wherein X is a $C_1$-$C_{12}$ ((per)fluoro)-oxyalkyl comprising catenary oxygen atoms, e.g. the perfluoro-2-propoxypropyl group;
(f) (per)fluorodioxoles having formula :

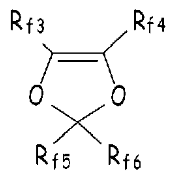

wherein each of $R_{f3}$, $R_{f4}$, $R_{f5}$, $R_{f6}$, equal or different each other, is independently a fluorine atom, a $C_1$-$C_6$ fluoro- or per(halo)fluoroalkyl, optionally comprising one or more oxygen atom, e.g. $-CF_3$, $-C_2F_5$, $-C_3F_7$, $-OCF_3$, $-OCF_2C$-$F_2OCF_3$.
(g) (per)fluoro-methoxy-vinylethers (MOVE, hereinafter) having formula:

$$CFX_2 = CX_2OCF_2OR''_f$$

wherein $R''_f$ is selected among $C_1$-$C_6$ (per)fluoroalkyls , linear or branched; $C_5$-$C_6$ cyclic (per)fluoroalkyls; and $C_2$-$C_6$ (per)fluorooxyalkyls, linear or branched,

comprising from 1 to 3 catenary oxygen atoms, and $X_2$ = F, H; preferably $X_2$ is F and $R''_f$ is $-CF_2CF_3$ (MOVE1); $-CF_2CF_2OCF_3$ (MOVE2); or $-CF_3$ (MOVE3).

**4.** Composition (C) according to claim 3, wherein said at least one (per)fluorinated monomer different from VDF is HFP.

**5.** Composition (C) according to anyone of the preceding claims, wherein fluoroelastomer (A) comprises one or more of:

- recurring units derived from one or more than one monomer free from fluorine;
- recurring units derived from at least one bis-olefin [bis-olefin (OF)] having general formula :

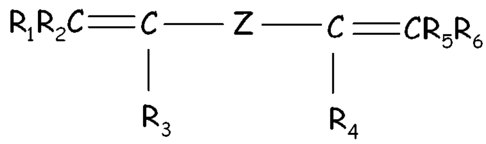

wherein $R_1$, $R_2$, $R_3$, $R_4$, $R_5$ and $R_6$, equal or different from each other, are H, a halogen, or a $C_1$-$C_5$ optionally halogenated group, possibly comprising one or more oxygen group; Z is a linear or branched $C_1$-$C_{18}$ optionally halogenated alkylene or cycloalkylene radical, optionally containing oxygen atoms, or a (per)fluoropolyoxyalkylene radical;
- recurring units derived from at least one (per)fluorinated monomer different from VDF and HFP.

**6.** Composition (C) according to anyone of the preceding claims, wherein fluoroelastomer (A) has the following monomer compositions (in mol %) :

(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %, bis-olefin (OF) 0-5 %;
(ii) vinylidene fluoride (VDF) 50-80 %, perfluoroalkyl vinyl ethers (PAVE) 5-50 %, tetrafluoroethylene (TFE) 0-20 %, bis-olefin (OF) 0-5 %;
(iii) vinylidene fluoride (VDF) 20-30 %, $C_2$-$C_8$ non-fluorinated olefins (Ol) 10-30 %, hexafluoropropene (HFP) and/or perfluoroalkyl vinyl ethers (PAVE) 18-27 %, tetrafluoroethylene (TFE) 10-30 %, bis-olefin (OF) 0-5 %;
(iv) tetrafluoroethylene (TFE) 45-65 %, $C_2$-$C_8$ non-fluorinated olefins (Ol) 20-55 %, vinylidene fluoride (VDF) 0.1-30 %, bis-olefin (OF) 0-5 %,
(v) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %, bis-olefin (OF) 0-5 %;
(vi) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %, bis-olefin (OF) 0-5 %.

**7.** Composition (C) according to anyone of the preceding claims, wherein the at least one acid (OA) comprises:

- at least one aromatic ring and at least one acid group linked to said aromatic ring via a sigma bond; and/or
- one electron donating group in the para-position with respect to the acid group; preferably wherein the acid group is selected from -COOH or $-SO_3H$, more preferably $-SO_3H$.

**8.** Composition (C) according to claim 7 wherein said the electron donating group is a C1-C5 alkyl group, preferably selected from $-CH_3$ and $-CH_2CH_3$.

**9.** Composition (C) according to anyone of the preceding claims wherein the at least one acid (OA) comprises at least one aromatic ring and at least one acid $-SO_3H$ group linked to said aromatic ring via a sigma bond and one electron donating group in the para-position with respect to the acid group which is selected from - $CH_3$ and $-CH_2CH_3$.

**10.** Composition (C) according to anyone of the preceding claims, wherein said at least one acid (OA) is p-toluensulfonic acid.

**11.** Composition (C) according to anyone of the preceding claims, wherein the at least one acid (OA) is in an amount of from 0.30 to 2.10 phr based on 100 phr of fluoroelastomer (A).

**12.** Composition (C) according to anyone of the preceding claims, wherein said anion A in formulae (P-1) to (P-12) is

selected from the group consisting of arylsulfonates and halides (iodide, bromide, chloride).

**13.** Composition (C) according to anyone of the preceding claims, said composition (C) further comprising:

- at least one basic compound [base (B)], preferably selected in the group comprising: organic bases, inorganic bases or mixtures of at least one organic and at least one inorganic bases; and/or
- one or more than one organic solvents [solvent (S)], preferably selected in the group comprising: polar aprotic organic solvents and ionic liquids;
- one or more convention additives, preferably selected in the group comprising: reinforcing fillers, thickeners, pigments, antioxidants, stabilizers.

**14.** A method for fabricating shaped articles, comprising the use of composition (C) as defined in any one of claims 1 to 13.

**15.** A cured article obtained from composition (C) as defined in any one of claims 1 to 13; preferably wherein said article is selected from pipes, joints, O-rings, hoses.

## Patentansprüche

**1.** Fluorelastomerzusammensetzung [Zusammensetzung (C)], umfassend:

- mindestens ein Vinylidenfluorid basierendes Fluorelastomer, umfassend Wiederholungseinheiten, die sich von Vinylidenfluorid (VDF) und von mindestens einem zusätzlichen (per)fluorierten Monomer, das von VDF verschieden ist, ableiten, [Fluorelastomer (A)];
- 0,30 bis 2,50 phr, bezogen auf 100 phr Fluorelastomer (A), mindestens einer organischen aromatischen Säure [Säure (OA)], bei der es sich um eine Verbindung mit mindestens einem aromatischen Ring und mindestens einer Säuregruppe, die über eine Sigma-Bindung oder eine Verknüpfungsgruppe mit dem aromatischen Ring verknüpft ist, handelt, mit der Maßgabe, dass dann, wenn es sich bei der Säuregruppe um -COOH handelt, der aromatische Ring keine -OH-Gruppe in para- oder meta-Position zu der Säuregruppe umfasst; und
- mindestens ein Pyridiniumsalz [Salz (P)] das einer der Formeln (P1) bis (P-12) entspricht:

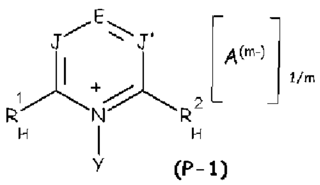
(P-1)

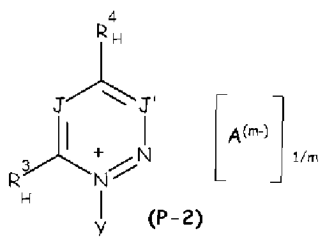
(P-2)

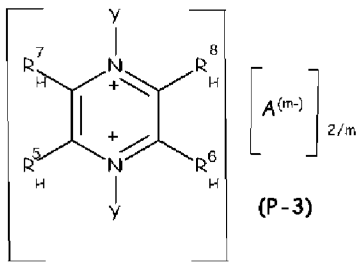
(P-3)

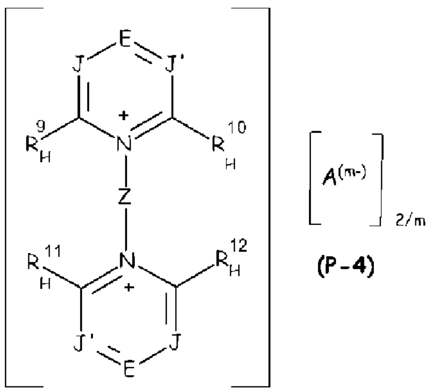
(P-4)

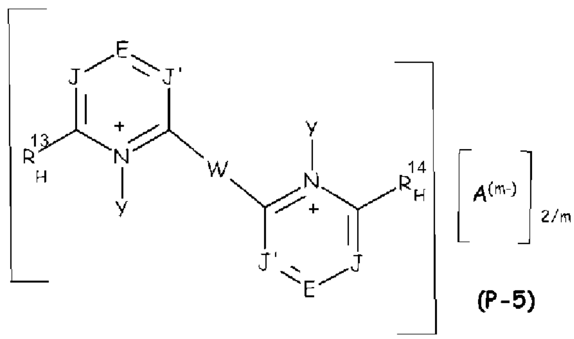
(P-5)

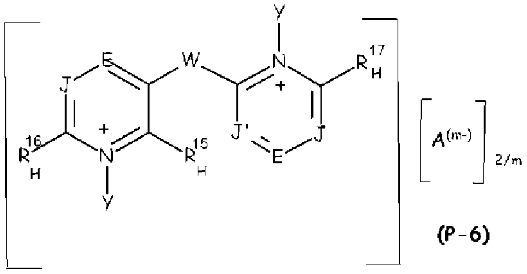

(P-6)

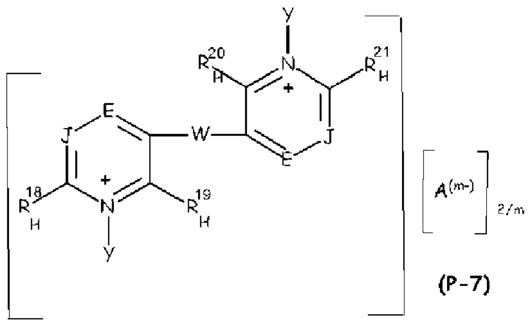

(P-7)

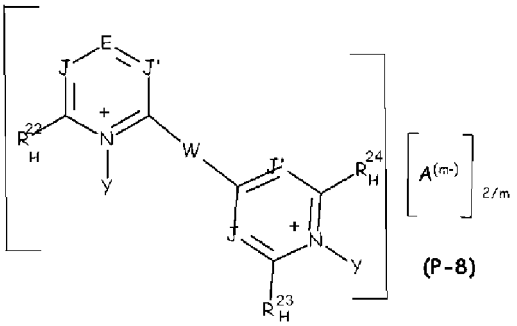

(P-8)

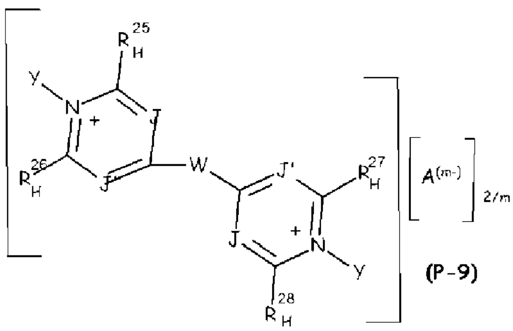

(P-9)

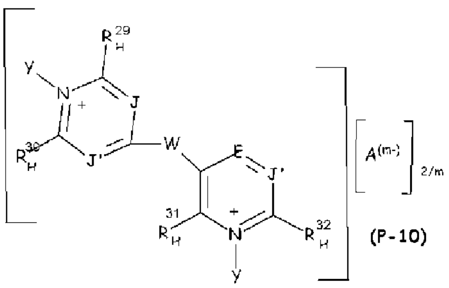

(P-10)

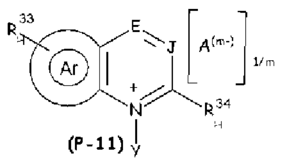

(P-11)

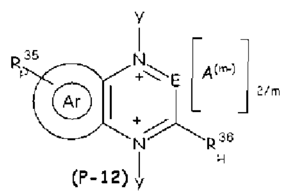

(P-12)

wobei:

- J und J' gleich oder voneinander verschieden sind und jeweils unabhängig bei jedem Auftreten für C-R* oder N stehen, wobei R* für H oder eine $C_1$-$C_{12}$-Kohlenwasserstoffgruppe steht;
- E für N oder eine Gruppe der Formel C-$R^o_H$ steht;
- Z für eine zweiwertige Kohlenwasserstoffgruppe mit 1 bis 12 Kohlenstoffatomen steht;
- W für eine Bindung steht oder für eine Brückengruppe, die aus der Gruppe bestehend aus zweiwertigen Kohlenwasserstoffgruppen mit 1 bis 12 Kohlenstoffatomen (vorzugsweise zweiwertigen aliphatischen Gruppen mit 1 bis 6 Kohlenstoffatomen) und zweiwertigen Fluorkohlenstoffgruppen mit 1 bis 12 Kohlenstoffatomen (vorzugsweise zweiwertigen perfluoraliphatischen Gruppen mit 1 bis 6 Kohlenstoffatomen) ausgewählt ist, steht;
- die mit dem Symbol:

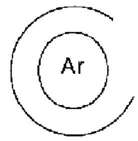

skizzierte Gruppe in Formel (P-11) und (P-12) für einen aromatischen ein- oder mehrkernigen Ring steht, der mit dem aromatischen Ring vom Pyridinium-Typ kondensiert ist, der ein oder mehrere zusätzliche Stickstoffatome gegebenenfalls quaternisierte Stickstoffatome, in dem Ring bzw. den Ringen enthalten kann;

- $R^1_H$, $R^2_H$, $R^3_H$, $R^4_H$, $R^5_H$, $R^6_H$, $R^7_H$, $R^5_H$, $R^9_H$, $R^{19}_H$, $R^{11}_H$, $R^{12}_H$, $R^{13}_H$, $R^{14}_H$, $R^{15}_H$, $R^{16}_H$, $R^{17}_H$, $R^{18}_H$,

$R^{19}_H$, $R^{20}_H$, $R^{21}_H$, $R^{22}_H$, $R^{23}_H$, $R^{24}_H$, $R^{25}_H$, $R^{26}_H$, $R^{27}_H$, $R^{28}_H$, $R^{29}_H$, $R^{30}_H$, $R^{31}_H$, $R^{32}_H$, $R^{33}_H$, $R^{34}_H$, $R^{35}_H$, $R^{36}_H$ und $R°_H$ gleich oder voneinander verschieden sind und jeweils unabhängig bei jedem Auftreten für -H oder eine Gruppe der Formel [Gruppe (alpha-H)]:

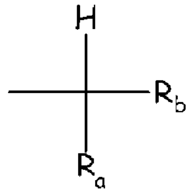

stehen, wobei $R_a$ und $R_b$ gleich oder voneinander verschieden sind und unabhängig für H oder eine $C_1$-$C_6$-Kohlenwasserstoffgruppe stehen;

- Y gleich oder verschieden ist und unabhängig für Sauerstoff oder eine $C_1$-$C_{12}$-Kohlenwasserstoffgruppe, bei der es sich insbesondere um eine aliphatische oder eine aromatische Gruppe handeln kann, die ein oder mehr als ein Heteroatom, das aus N, O, S und Halogenen ausgewählt ist, enthalten kann, steht;
- $A^{(m-)}$ für ein Anion mit der Wertigkeit m steht;

mit der Maßgabe, dass

(i) dann, wenn das Salz (P) die Formel (P-1) aufweist, mindestens zwei von $R^1_H$, $R^2_H$ und $R°_H$ für Gruppen (alpha-H) stehen;
(ii) dann, wenn das Salz (P) die Formel (P-2) aufweist, $R^3_H$ und $R^4_H$ für Gruppen (alpha-H) stehen;
(iii) dann, wenn das Salz (P) die Formel (P-3) aufweist, mindestens zwei von $R^5_H$, $R^6_H$, $R^7_H$ und $R^8_H$ für Gruppen (alpha-H) stehen;
(iv) dann, wenn das Salz (P) die Formel (P-4) aufweist, mindestens zwei von $R^9_H$, $R^{10}_H$, $R^{11}_H$, $R^{12}_H$ und $R°_H$ für Gruppen (alpha-H) stehen;
(v) dann, wenn das Salz (P) die Formel (P-5) aufweist, mindestens zwei von $R^{13}_H$, $R^{14}_H$ und $R°_H$ für Gruppen (alpha-H) stehen;
(vi) dann, wenn das Salz (P) die Formel (P-6) aufweist, mindestens zwei von $R^{15}_H$, $R^{16}_H$, $R^{17}_H$ und $R°_H$ für Gruppen (alpha-H) stehen;
(vii) dann, wenn das Salz (P) die Formel (P-7) aufweist, mindestens zwei von $R^{18}_H$, $R^{19}_H$, $R^{20}_H$, $R^{21}_H$ und $R°_H$ für Gruppen (alpha-H) stehen;
(viii) dann, wenn das Salz (P) die Formel (P-8) aufweist, mindestens zwei von $R^{22}_H$, $R^{23}_H$, $R^{24}_H$ und $R°_H$ für Gruppen (alpha-H) stehen;
(ix) dann, wenn das Salz (P) die Formel (P-9) aufweist, mindestens zwei von $R^{25}_H$, $R^{26}_H$, $R^{27}_H$ und $R^{28}_H$ für Gruppen (alpha-H) stehen;
(x) dann, wenn das Salz (P) die Formel (P-10) aufweist, mindestens zwei von $R^{29}_H$, $R^{30}_H$, $R^{31}_H$, $R^{32}_H$ und $R^{28}_H$ für Gruppen (alpha-H) stehen;
(xi) dann, wenn das Salz (P) die Formel (P-11) aufweist, mindestens zwei von $R^{33}_H$, $R^{34}_H$ und $R^{28}_H$ für Gruppen (alpha-H) stehen;
(xii) dann, wenn das Salz (P) die Formel (P-12) aufweist, mindestens zwei von $R^{35}_H$, $R^{36}_H$ und $R°_H$ für Gruppen (alpha-H) stehen.

2. Zusammensetzung (C) nach Anspruch 1, wobei das Fluorelastomer (A) mindestens 15 Mol-%, vorzugsweise mindestens 20 Mol-%, weiter bevorzugt mindestens 35 Mol- %, Wiederholungseinheiten, die sich von VDF ableiten, bezogen auf alle Wiederholungseinheiten des Fluorelastomers, und/oder höchstens 5 Mol-%, vorzugsweise höchstens 80 Mol-%, weiter bevorzugt höchstens 78 Mol-%, Wiederholungseinheiten, die sich von VDF ableiten, bezogen auf alle Wiederholungseinheiten des Fluorelastomers, umfasst.

3. Zusammensetzung (C) nach Anspruch 1 oder 2, wobei das mindestens eine (per)fluorierte Monomer, das von VDF verschieden ist, aus der Gruppe ausgewählt ist, die Folgendes umfasst und vorzugsweise daraus besteht:

(a) $C_2$-$C_8$-Perfluorolefine, wie Tetrafluorethylen (TFE) und Hexafluorpropylen (HFP);
(b) wasserstoffhaltige $C_2$-$C_8$-Olefinen, die von VDF verschieden sind, wie Vinylfluorid (VF), Trifluorethylen

(TrFE), Perfluoralkylethylenen der Formel $CH_2 = CH-R_f$, wobei $R_f$ für eine $C_1$-$C_6$-Perfluoralkylgruppe steht;
(c) $C_2$-$C_8$-Chlor- und/oder -Brom- und/oder - Iodfluorolefine wie Chlortrifluorethylen (CTFE);
(d) (Per)fluoralkylvinylether (PAVE) der Formel $CF_2 = CFOR_f$, wobei $R_f$ für eine $C_1$-$C_6$-(Per)fluoralkylgruppe, z. B. $CF_3$, $C_2F_5$, $C_3F_7$, steht;
(e) (Per)fluoroxyalkylvinylether der Formel $CF_2 = CFOX$, wobei X für ein $C_1$-$C_{12}$-((Per)fluor)oxyalkyl mit kettenständigen Sauerstoffatomen, z. B. die Perfluor-2-propoxypropylgruppe, steht;
(f) (Per)fluordioxolen der Formel:

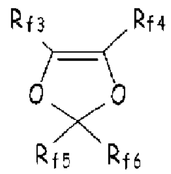

wobei $R_{f3}$, $R_{f4}$, $R_{f5}$ und $R_{f6}$, die gleich oder voneinander verschieden sind, jeweils unabhängig für ein Fluoratom oder ein $C_1$-$C_6$-Fluor- oder Per(halogen)fluoralkyl, das gegebenenfalls ein oder mehrere Sauerstoffatome umfasst, z. B. $-CF_3$, $-C_2F_5$, $-C_3F_7$, $-OCF_3$ oder $-OCF_2CF_2OCF_3$, stehen;
(g) (Per)fluormethoxyvinylether (im Folgenden MOVE) der Formel:

$$CFX_2 = CX_2OCF_2OR''_f$$

wobei R"f aus linearen oder verzweigten $C_1$-$C_6$(Per)fluoralkylgruppen; cyclischen $C_5$-$C_6$-(Per)fluoralkylgruppen und linearen oder verzweigten $C_2$-$C_6$-(Per)fluoroxyalkylgruppen mit 1 bis 3 kettenständigen Sauerstoffatomen ausgewählt ist und $X_2$ = F, H; vorzugsweise $X_2$ für F steht und $R''_f$ für $-CF_2CF_3$ (MOVE1); $-CF_2CF_2OCF_3$ (MOVE2) oder $-CF_3$ (MOVE3) steht;

**4.** Zusammensetzung (C) nach Anspruch 3, wobei es sich bei dem mindestens einen (per)fluorierten Monomer, das von VDF verschieden ist, um HFP handelt.

**5.** Zusammensetzung (C) nach einem der vorhergehenden Ansprüche, wobei das Fluorelastomer (A) eines oder mehrere der Folgenden umfasst:

- Wiederholungseinheiten, die sich von einem oder mehreren fluorfreien Monomeren ableiten;
- Wiederholungseinheiten, die sich von mindestens einem Bisolefin [Bisolefin (OF)] mit der folgenden allgemeinen Formel ableiten:

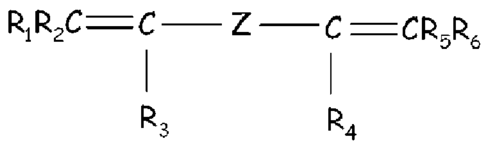

wobei $R_1$, $R_2$, $R_3$, $R_4$, $R_5$ und $R_6$ gleich oder voneinander verschieden sind und für H, ein Halogen oder eine gegebenenfalls halogenierte $C_1$-$C_5$-Gruppe, die möglicherweise eine oder mehrere Sauerstoffgruppen umfasst, stehen; Z für einen linearen oder verzweigten gegebenenfalls halogenierten $C_1$-$C_{18}$-Alkylen- oder Cycloalkylenrest, der gegebenenfalls Sauerstoffatome enthält, oder einen (Per)fluorpolyoxyalkylenrest steht;

- Wiederholungseinheiten, die sich von mindestens einem (per) fluorierten Monomer, das von VDF und HFP verschieden ist, ableiten.

**6.** Zusammensetzung (C) nach einem der vorhergehenden Ansprüche, wobei das Fluorelastomer (A) die folgenden Monomerzusammensetzungen (in Mol-%) aufweist:

(i) Vinylidenfluorid (VDF) 35-85 %, Hexafluorpropen (HFP) 10-45 %, Tetrafluorethylen (TFE) 0-30 %, Perfluoralkylvinylether (PAVE) 0-15 %, Bisolefin (OF) 0-5 %;
(ii) Vinylidenfluorid (VDF) 50-80 %, Perfluoralkylvinylether (PAVE) 5-50 %, Tetrafluorethylen (TFE) 0-20 %, Bisolefin (OF) 0-5 %;

(iii) Vinylidenfluorid (VDF) 20-30 %, nichtfluorierte $C_2$-$C_8$-Olefine (OI) 10-30 %, Hexafluorpropen (HFP) und/oder Perfluoralkylvinylether (PAVE) 18-27 %, Tetrafluorethylen (TFE) 10-30 %, Bisolefin (OF) 0-5 %;
(iv) Tetrafluorethylen (TFE) 45-65 %, nichtfluorierte $C_2$-$C_8$-Olefine (OI) 20-55 %, Vinylidenfluorid (VDF) 0,1-30 %, Bisolefin (OF) 0-5 %,
(v) Tetrafluorethylen (TFE) 33-75 %, Perfluoralkylvinylether (PAVE) 15-45 %, Vinylidenfluorid (VDF) 5-30 %, Hexafluorpropen HFP 0-30 %, Bisolefin (OF) 0-5 %.
(vi) Vinylidenfluorid (VDF) 35-85 %, Fluorvinylether (MOVE) 5-40 %, Perfluoralkylvinylether (PAVE) 0-30 %, Tetrafluorethylen (TFE) 0-40 %, Hexafluorpropen (HFP) 0-30 %, Bisolefin (OF) 0-5 %.

**7.** Zusammensetzung (C) nach einem der vorhergehenden Ansprüche, wobei die mindestens eine Säure (OA) Folgendes umfasst:

- mindestens einen aromatischen Ring und mindestens eine Säuregruppe, die über eine Sigma-Bindung mit dem aromatischen Ring verknüpft ist; und/oder
- eine elektronenliefernde Gruppe in para-Position zu der Säuregruppe; vorzugsweise wobei die Säuregruppe aus -COOH oder $-SO_3H$, weiter bevorzugt $-SO_3H$, ausgewählt ist.

**8.** Zusammensetzung (C) nach Anspruch 7, wobei es sich bei der elektronenliefernden Gruppe um eine C1-C5-Alkylgruppe handelt, die vorzugsweise aus $-CH_3$ und $-CH_2CH_3$ ausgewählt ist.

**9.** Zusammensetzung (C) nach einem der vorhergehenden Ansprüche, wobei die mindestens eine Säure (OA) mindestens einen aromatischen Ring und mindestens eine $SO_3H$-Säuregruppe, die über eine Sigma-Bindung mit dem aromatischen Ring verknüpft ist, und eine elektronenliefernde Gruppe in para-Position zu der Säuregruppe, die aus $-CH_3$ und $-CH_2CH_3$ ausgewählt ist, umfasst.

**10.** Zusammensetzung (C) nach einem der vorhergehenden Ansprüche, wobei es sich bei der mindestens einen Säure (OA) um p-Toluolsulfonsäure ist.

**11.** Zusammensetzung (C) nach einem der vorhergehenden Ansprüche, wobei die mindestens eine Säure (OA) in einer Menge von 0,30 bis 2,10 phr, bezogen auf 100 phr Fluorelastomer (A), vorliegt.

**12.** Zusammensetzung (C) nach einem der vorhergehenden Ansprüche, wobei das Anion A in den Formeln (P-1) bis (P-12) aus der Gruppe bestehend aus Arylsulfonaten und Halogeniden (Iodid, Bromid, Chlorid) ausgewählt ist.

**13.** Zusammensetzung (C) nach einem der vorhergehenden Ansprüche, wobei die Zusammensetzung (C) ferner Folgendes umfasst:

- mindestens eine basische Verbindung [Base (B)], vorzugsweise ausgewählt aus der Gruppe umfassend: organische Basen, anorganische Basen oder Mischungen von mindestens einer organischen und mindestens einer anorganischen Base; und/oder
- ein oder mehr als ein organisches Lösungsmittel [Lösungsmittel (S)], vorzugsweise ausgewählt aus der Gruppe umfassend: polare aprotische organische Lösungsmittel und ionische Flüssigkeiten;
- ein oder mehrere herkömmliche Additive, vorzugsweise ausgewählt aus der Gruppe umfassend: verstärkende Füllstoffe, Verdicker, Pigmente, Antioxidantien, Stabilisatoren.

**14.** Verfahren zur Herstellung von Formkörpern, bei dem man die Zusammensetzung (C) gemäß einem der Ansprüche 1 bis 13 verwendet.

**15.** Gehärteter Artikel, erhalten aus der Zusammensetzung (C) gemäß einem der Ansprüche 1 bis 13; vorzugsweise wobei der Gegenstand aus Rohren, Verbindungsstücken, O-Ringen und Schläuchen ausgewählt ist.

## Revendications

**1.** Composition de fluoroélastomère [composition (C)] comprenant :

- au moins un fluoroélastomère à base de fluorure de vinylidène comprenant des motifs récurrents dérivés du fluorure de vinylidène (VDF) et d'au moins un monomère (per)fluoré supplémentaire différent du VDF [fluoroélastomère (A)] ;

- 0,30 à 2,50 phr sur la base de 100 phr de fluoroélastomère (A) d'au moins un acide organique aromatique [acide (OA)] qui est un composé comprenant au moins un cycle aromatique et au moins un groupe de type acide, qui est lié audit cycle aromatique par une liaison sigma ou un groupe de liaison, à condition que, lorsque le groupe de type acide est -COOH, le cycle aromatique ne comprenne pas un groupe -OH en position para ou méta par rapport audit groupe de type acide ; et
- au moins un sel de pyridinium [sel (P)] répondant à l'une quelconque des formules (P1) à (P-12) :

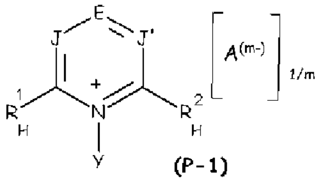
(P-1)

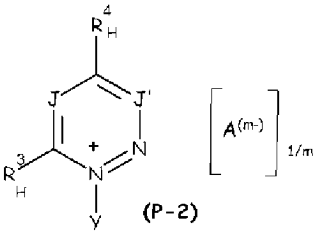
(P-2)

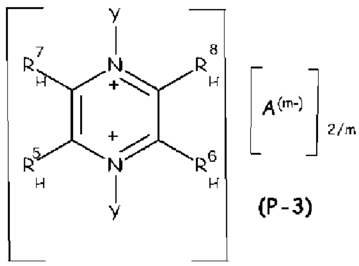
(P-3)

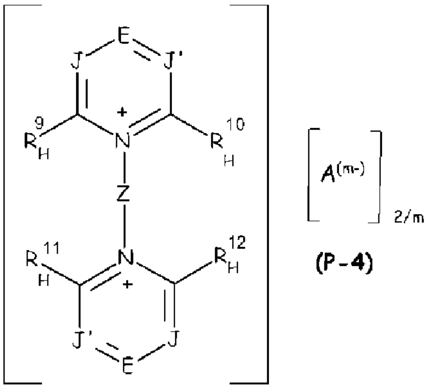
(P-4)

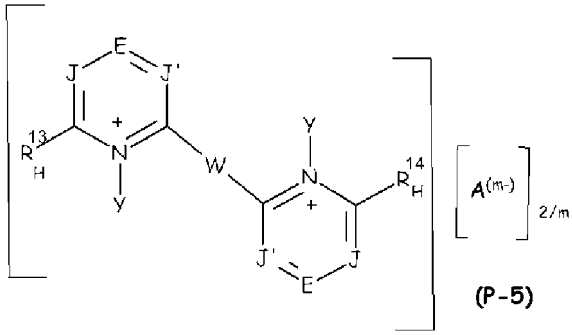
(P-5)

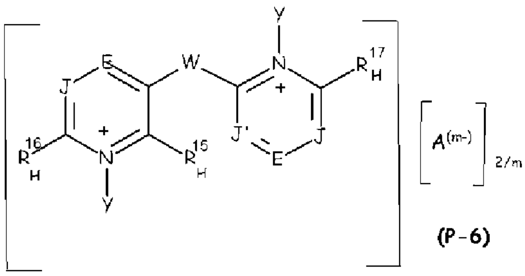
(P-6)

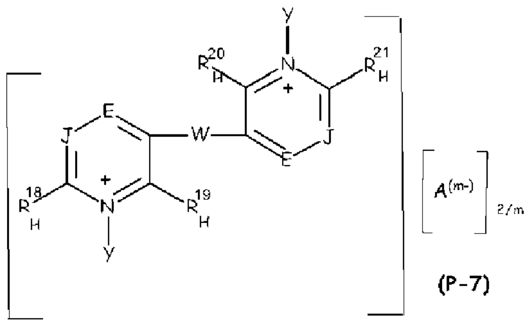
(P-7)

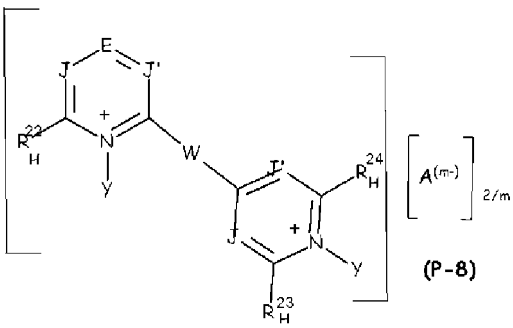
(P-8)

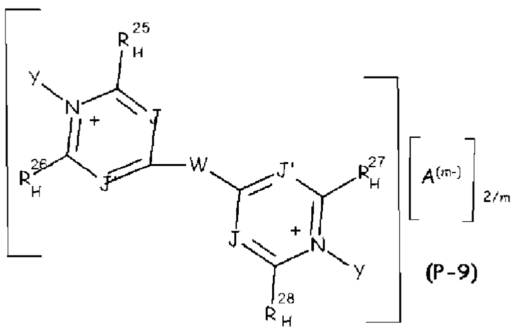
(P-9)

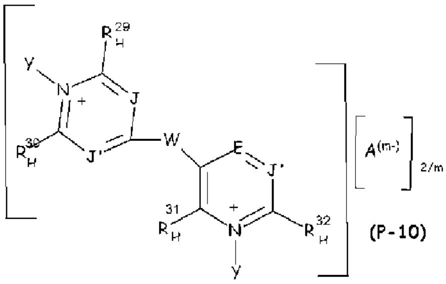

(P-10)

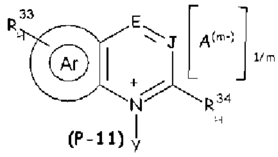

(P-11)

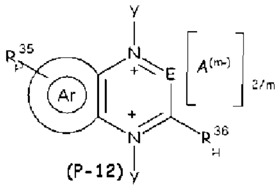

(P-12)

dans laquelle :

- chacun parmi J et J', égal ou différent l'un de l'autre, est indépendamment à chaque occurrence C-R* ou N, dans laquelle R* est H ou un groupe hydrocarboné en $C_1$-$C_{12}$ ;
- E est N ou un groupe de formule C-$R°_H$ ;
- Z est un groupe hydrocarboné divalent comprenant de 1 à 12 atomes de carbone ;
- W est une liaison ou un groupe pontant choisi dans le groupe constitué par des groupes hydrocarbonés divalents comprenant de 1 à 12 atomes de carbone (de préférence des groupes aliphatiques divalents comprenant de 1 à 6 atomes de carbone) et des groupes fluorocarbonés divalents comprenant de 1 à 12 atomes de carbone (de préférence des groupes perfluoroaliphatiques divalents comprenant de 1 à 6 atomes de carbone) ;
- le groupe esquissé avec le symbole :

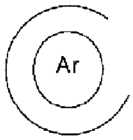

dans la formule (P-11) et (P-12) désigne un cycle aromatique mono- ou polynucléaire condensé au cycle aromatique de type pyridinium, qui peut comprendre un ou plusieurs atomes d'azote supplémentaires, éventuellement des atomes d'azote quaternisés, dans le ou les cycles ;

- chacun parmi $R^1_H$, $R^2_H$, $R^3_H$, $R^4_H$, $R^5_H$, $R^6_H$, $R^7_H$, $R^8_H$, $R^9_H$, $R^{10}_H$, $R^{11}_H$, $R^{12}_H$, $R^{13}_H$, $R^{14}_H$, $R^{15}_H$, $R^{16}_H$, $R^{17}_H$, $R^{18}_H$, $R^{19}_H$, $R^{20}_H$, $R^{21}_H$, $R^{22}_H$, $R^{23}_H$, $R^{24}_H$, $R^{25}_H$, $R^{26}_H$, $R^{27}_H$, $R^{28}_H$, $R^{29}_H$, $R^{30}_H$, $R^{31}_H$, $R^{32}_H$, $R^{33}_H$, $R^{34}_H$, $R^{35}_H$, $R^{36}_H$ et $R°_H$, égaux ou différents les uns des autres, est indépendamment à chaque occurrence - H ou un groupe de formule [groupe (alpha-H)] :

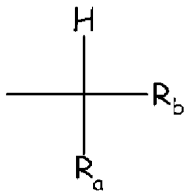

dans laquelle $R_a$ et $R_b$, égaux ou différents l'un de l'autre, représentent indépendamment H ou un groupe hydrocarboné en $C_1$-$C_6$ ;

- Y, égaux ou différents les uns des autres, est indépendamment oxygène ou un groupe hydrocarboné en $C_1$-$C_{12}$, qui peut être notamment un groupe aliphatique ou un groupe aromatique, qui peut comprendre un ou plusieurs hétéroatomes choisis parmi N, O, S et des halogènes ;
- $A^{(m-)}$ est un anion ayant la valence m ;

à condition que

(i) lorsque le sel (P) est de formule (P-1) au moins deux parmi $R^1_H$, $R^2_H$ et $R°_H$ sont des groupes (alpha-H) ;
(ii) lorsque le sel (P) est de formule (P-2) $R^3_H$ et $R^4_H$ sont des groupes (alpha-H) ;
(iii) lorsque le sel (P) est de formule (P-3), au moins deux parmi $R^5_H$, $R^6_H$, $R^7_H$ et $R^8_H$ sont des groupes (alpha-H) ;

(iv) lorsque le sel (P) est de formule (P-4), au moins deux parmi $R^9_H$, $R^{10}_H$, $R^{11}_H$, $R^{12}_H$ et $R°_H$ sont des groupes (alpha-H) ;
(v) lorsque le sel (P) est de formule (P-5), au moins deux parmi $R^{13}_H$, $R^{14}_H$ et $R°_H$ sont des groupes (alpha-H) ;
(vi) lorsque le sel (P) est de formule (P-6), au moins deux parmi $R^{15}_H$, $R^{16}_H$, $R^{17}_H$ et $R°_H$ sont des groupes (alpha-H) ;
(vii) lorsque le sel (P) est de formule (P-7), au moins deux parmi $R^{18}_H$, $R^{19}_H$, $R^{20}_H$, $R^{21}_H$, et $R°_H$ sont des groupes (alpha-H) ;
(viii) lorsque le sel (P) est de formule (P-8), au moins deux parmi $R^{22}_H$, $R^{23}_H$, $R^{24}_H$ et $R°_H$ sont des groupes (alpha-H) ;
(ix) lorsque le sel (P) est de formule (P-9), au moins deux parmi $R^{25}_H$, $R^{26}_H$, $R^{27}_H$ et $R^{28}_H$ sont des groupes (alpha-H) ;
(x) lorsque le sel (P) est de formule (P-10), au moins deux parmi $R^{29}_H$, $R^{30}_H$, $R^{31}_H$, $R^{32}_H$ et $R^{28}_H$ sont des groupes (alpha-H) ;
(xi) lorsque le sel (P) est de formule (P-11), au moins deux parmi $R^{33}_H$, $R^{34}_H$ et $R^{28}_H$ sont des groupes (alpha-H) ;
(xii) lorsque le sel (P) est de formule (P-12), au moins deux parmi $R^{35}_H$, $R^{36}_H$ et $R°_H$ sont des groupes (alpha-H).

**2.** Composition (C) selon la revendication 1, dans laquelle le fluoroélastomère (A) comprend au moins 15 % en moles, de préférence au moins 20 % en moles, plus préférablement au moins 35 % en moles de motifs récurrents dérivés de VDF, par rapport à tous les motifs récurrents du fluoroélastomère et/ou au plus 5 % en moles, de préférence au plus 80 % en moles, plus préférablement au plus 78 % en moles de motifs récurrents dérivés de VDF, par rapport à tous les motifs récurrents du fluoroélastomère.

**3.** Composition (C) selon la revendication 1 ou 2, dans laquelle ledit au moins un monomère (per) fluoré différent du VDF est choisi dans le groupe comprenant, de préférence constitué par :

(a) $C_2$-$C_8$ perfluorooléfines, telles que tétrafluoroéthylène (TFE) et hexafluoropropylène (HFP) ;
(b) $C_2$-$C_8$ oléfines contenant hydrogène différentes du VDF, telles que fluorure de vinyle (VF), trifluoroéthylène (TrFE), perfluoroalkyléthylènes de formule $CH_2 = CH\text{-}R_f$, $R_f$ étant un groupe $C_1$-$C_6$ perfluoroalkyle ;
(c) $C_2$-$C_8$ chloro et/ou bromo et/ou iodo-fluorooléfines telles que chlorotrifluoroéthylène (CTFE) ;
(d) (per)fluoroalkylvinyléthers (PAVE) de formule $CF_2 = CFOR_f$, $R_f$ étant un groupe $C_1$-$C_6$ (per) fluoroalkyle, par exemple $CF_3$, $C_2F_5$, $C_3F_7$ ;
(e) (per) fluoro-oxy-alkylvinyléthers de formule $CF_2 = CFOX$, X étant un $C_1$-$C_{12}$ ((per)fluoro)-oxyalkyle comprenant des atomes d'oxygène caténaires, par exemple le groupe perfluoro-2-propoxypropyle ;
(f) (per)fluorodioxoles ayant la formule :

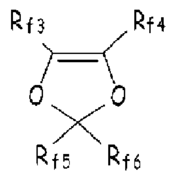

chacun parmi $R_{f3}$, $R_{f4}$, $R_{f5}$ et $R_{f6}$, égaux ou différents les uns des autres, étant indépendamment un atome de fluor, un $C_1$-$C_6$ fluoro- ou per(halogéno)fluoroalkyle, éventuellement comprenant un ou plusieurs atomes d'oxygène, par exemple $-CF_3$, $-C_2F_5$, $-C_3F_7$, $-OCF_3$, $-OCF_2CF_2OCF_3$.
(g) (per)fluoro-méthoxy-vinyléthers (MOVE, ci-après) ayant la formule :

$$CFX_2 = CX_2OCF_2OR''_f$$

R"f étant choisi parmi des $C_1$-$C_6$ (per)fluoroalkyles, linéaires ou ramifiés ; $C_5$-$C_6$ (per)fluoroalkyles cycliques ; et $C_2$-$C_6$ (per)fluorooxyalkyles, linéaires ou ramifiés, comprenant de 1 à 3 atomes d'oxygène caténaires, et $X_2$ = F, H ; préférablement $X_2$ étant F et $R''_f$ étant $-CF_2CF_3$ (MOVE1) ; $-CF_2CF_2OCF_3$ (MOVE2) ; ou $-CF_3$ (MOVE3).

**4.** Composition (C) selon la revendication 3, dans laquelle ledit au moins un monomère (perfluoré différent du VDF est HFP.

**5.** Composition (C) selon l'une quelconque des revendications précédentes, dans laquelle le fluoroélastomère (A)

comprend un ou plusieurs parmi :

- motifs récurrents dérivés d'un ou de plusieurs monomère exempt de fluor ;
- motifs récurrents dérivés d'au moins une bis-oléfine [bis-oléfine(OF)] ayant la formule générale :

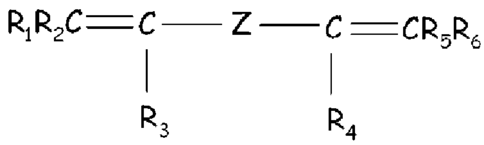

dans laquelle $R_1$, $R_2$, $R_3$, $R_4$, $R_5$ et $R_6$, égaux ou différents les uns des autres, sont H, un halogène ou un groupe en $C_1$-$C_5$ éventuellement halogéné, comprenant éventuellement un ou plusieurs groupes oxygène ; Z est un radical alkylène ou cycloalkylène linéaire ou ramifié en $C_1$-$C_{18}$ éventuellement halogéné, contenant éventuellement des atomes d'oxygène, ou un radical (per)fluoropolyoxyalkylène ;

- motifs récurrents dérivés d'au moins un monomère (perfluoré différent du VDF et du HFP.

**6.** Composition (C) selon l'une quelconque des revendications précédentes, dans laquelle l'élastomère fluoré (A) a les compositions de monomères suivantes (% en moles) :

(i) fluorure de vinylidène (VDF) 35-85 %, hexafluoropropène (HFP) 10-45 %, tétrafluoroéthylène (TFE) 0-30 %, perfluoroalkylvinyléthers (PAVE) 0-15 %, bis-oléfine (OF) 0-5 % ;
(ii) fluorure de vinylidène (VDF) 50-80 %, perfluoroalkylvinyléthers (PAVE) 5-50 %, tétrafluoroéthylène (TFE) 0-20 %, bis-oléfine (OF) 0-5 % ;
(iii) fluorure de vinylidène (VDF) 20-30 %, oléfines non fluorées en $C_2$-$C_8$ (OI) 10-30 %, hexafluoropropène (HFP) et/ou perfluoroalkylvinyléthers (PAVE) 18-27 %, tétrafluoroéthylène (TFE) 10-30 %, bis-oléfine (OF) 0-5 % ;
(iv) tétrafluoroéthylène (TFE) 45-65 %, oléfines non fluorées en $C_2$-$C_8$ (OI) 20-55 %, fluorure de vinylidène (VDF) 0,1-30 %, bis-oléfine (OF) 0-5 %,
(v) tétrafluoroéthylène (TFE) 33-75 %, perfluoroalkylvinyléthers (PAVE) 15-45 %, fluorure de vinylidène (VDF) 5-30 %, hexafluoropropène HFP 0-30 %, bis-oléfine (OF) 0-5 % ;
(vi) fluorure de vinylidène (VDF) 35-85 %, fluorovinyléthers (MOVE) 5-40 %, perfluoroalkylvinyléthers (PAVE) 0-30 %, tétrafluoroéthylène (TFE) 0-40 %, hexafluoropropène (HFP) 0-30 %, bis-oléfine (OF) 0-5 %.

**7.** Composition (C) selon l'une quelconque des revendications précédentes, dans laquelle l'au moins un acide (OA) comprend :

- au moins un cycle aromatique et au moins un groupe de type acide lié audit cycle aromatique par une liaison sigma ; et/ou
- un groupe donneur d'électrons en position para par rapport au groupe de type acide ; de préférence, dans lequel le groupe de type acide est choisi parmi -COOH ou -$SO_3H$, plus préférablement -$SO_3H$.

**8.** Composition (C) selon la revendication 7, dans laquelle ledit groupe donneur d'électrons est un groupe alkyle en C1-C5, de préférence choisi parmi -$CH_3$ et - $CH_2CH_3$.

**9.** Composition (C) selon l'une quelconque des revendications précédentes, dans laquelle l'au moins un acide (OA) comprend au moins un cycle aromatique et au moins un groupe -$SO_3H$ de type acide lié audit cycle aromatique par l'intermédiaire d'une liaison sigma et un groupe donneur d'électrons en position para par rapport au groupe de type acide qui est choisi parmi -$CH_3$ et - $CH_2CH_3$.

**10.** Composition (C) selon l'une quelconque des revendications précédentes, dans laquelle ledit au moins un acide (OA) est l'acide p-toluènesulfonique.

**11.** Composition (C) selon l'une quelconque des revendications précédentes, dans laquelle l'au moins un acide (OA) est présent en une quantité de 0,30 à 2,10 phr sur la base de 100 phr de fluoroélastomère (A).

**12.** Composition (C) selon l'une quelconque des revendications précédentes, dans laquelle ledit anion A dans les formules (P-1) à (P-12) est choisi dans le groupe constitué par les arylsulfonates et les halogénures (iodure, bromure,

chlorure).

**13.** Composition (C) selon l'une quelconque des revendications précédentes, ladite composition (C) comprenant en outre :

- au moins un composé basique [base (B)], de préférence choisi dans le groupe comprenant : les bases organiques, les bases inorganiques ou les mélanges d'au moins une base organique et d'au moins une base inorganique ; et/ou
- un ou plusieurs solvants organiques [solvant (S)], de préférence choisis dans le groupe comprenant : solvants organiques aprotiques polaires et liquides ioniques ;
- un ou plusieurs additifs conventionnels, choisis de préférence dans le groupe comprenant : charges de renforcement, épaississants, pigments, antioxydants, stabilisants.

**14.** Procédé pour la fabrication d'articles façonnés, comprenant l'utilisation de la composition (C) telle que définie dans l'une quelconque des revendications 1 à 13.

**15.** Article durci obtenu à partir de la composition (C) telle que définie dans l'une quelconque des revendications 1 à 13 ; de préférence, dans lequel ledit article est choisi parmi des conduits, des joints, des joints toriques, des tuyaux.

Fig. 1

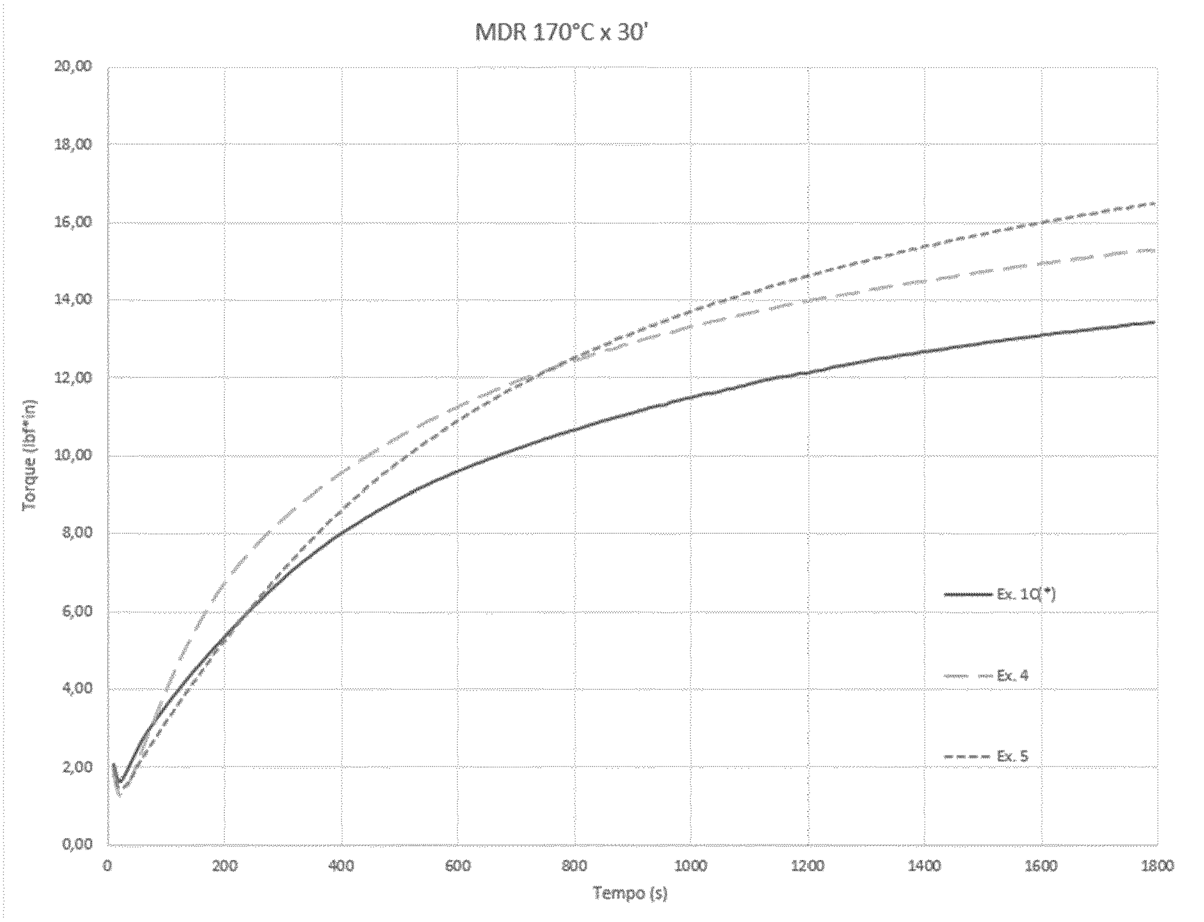
MDR 170°C x 30'
Torque (lbf*in)
20,00
18,00
16,00
14,00
12,00
10,00
8,00
6,00
4,00
2,00
0,00
0
200
400
600
800
1000
1200
1400
1600
1800
Tempo (s)
Ex. 10(*)
Ex. 4
Ex. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 21202584
- WO 2016180660 A
- WO 2020188125 A
- EP 661304 A, AUSIMONT SPA
- EP 5071995 A